Europäisches Patentamt

European Patent Office

Office européen des brevets

(19)

(11) **EP 0 781 077 B1**

(12) **EUROPÄISCHE PATENTSCHRIFT**

(45) Veröffentlichungstag und Bekanntmachung des Hinweises auf die Patenterteilung:
**31.01.2001 Patentblatt 2001/05**

(51) Int Cl.⁷: **H05B 41/282**, H02M 7/5383

(21) Anmeldenummer: **96118970.1**

(22) Anmeldetag: **27.11.1996**

(54) **Schaltungsanordnung zum Betrieb einer Lampe**

Circuit for operating a lamp

Circuit pour alimenter une lampe

(84) Benannte Vertragsstaaten:
**BE DE FR GB IT NL**

(30) Priorität: **22.12.1995 DE 19548506**

(43) Veröffentlichungstag der Anmeldung:
**25.06.1997 Patentblatt 1997/26**

(73) Patentinhaber: **Patent-Treuhand-Gesellschaft für elektrische Glühlampen mbH**
**81543 München (DE)**

(72) Erfinder:
• **Schmitt, Harald**
**80689 München (DE)**

• **Häussinger, Peter**
**86199 Augsburg (DE)**
• **Reiser, Ludwig**
**86368 Gersthofen (DE)**
• **Fischer, Klaus**
**81377 München (DE)**
• **Hirschmann, Walter**
**81827 München (DE)**

(56) Entgegenhaltungen:
**EP-A- 0 580 255**  **WO-A-85/01180**
**DE-A- 3 403 129**  **DE-A- 4 129 430**
**DE-A- 4 317 904**

## Beschreibung

Die Erfindung betrifft eine Schaltungsanordnung zum Betrieb einer Lampe, insbesondere einer Niederdruckentladungslampe, nach dem Oberbegriff der Ansprüche 1 oder 2.

Bei solchen freischwingenden Schaltungen müssen die Schaltelemente mit einer Ansteuerleistung im Takt der Schaltfrequenz versorgt werden.

Bekannte Anordnungen benutzen hierzu einen separaten Stromwandler, der entweder als Sättigungsstromwandler (Ringkern) oder als Übertrager mit definiertem Luftspalt ausgebildet ist (Hirschmann, W.: "Elektronikschaltungen" Siemens AG, 1982, Seiten 148 und 150).

Die Nachteile einer solchen Anordnung bestehen darin, daß ein separates, teures Wickelteil benötigt wird, dessen Fertigungstoleranzen sich zudem maßgeblich auf die Funktionsparameter der Gesamtanordnung auswirken.

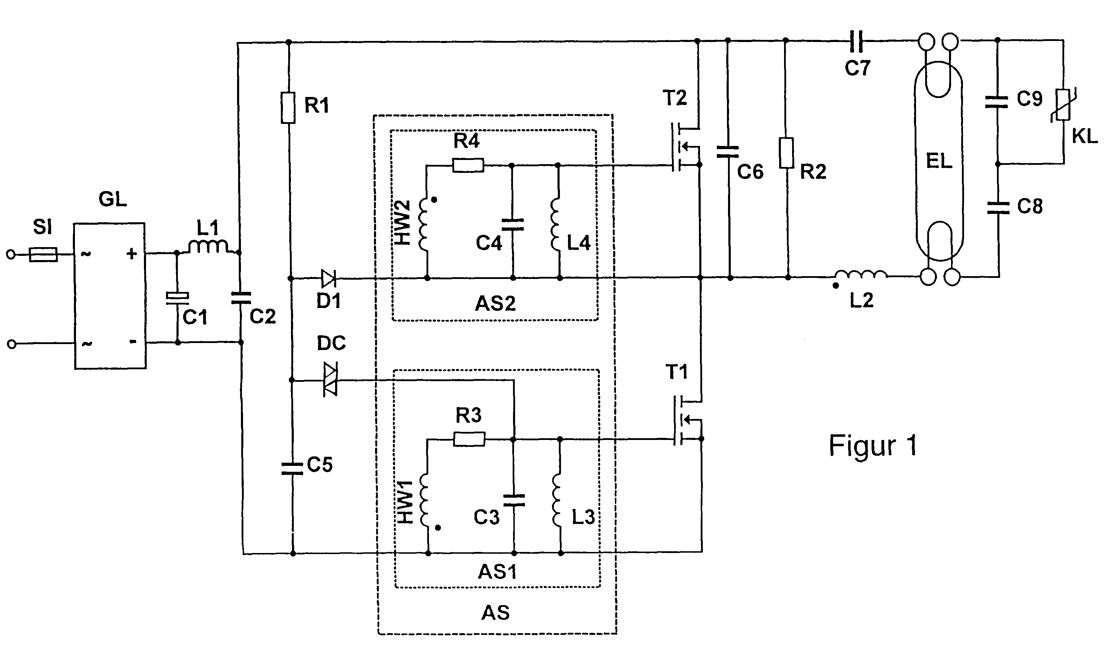

Eine andere Möglichkeit besteht darin, zusätzliche Hilfswicklungen auf der ohnehin benötigten Resonanz- bzw. Strombegrenzungsinduktivität (vgl. L2 in Figur 1) anzubringen und die dadurch gewonnenen Steuersignale über ein Phasenschiebernetzwerk an die Gate- bzw. Basiseingänge der Schalttransistoren zu legen (DE-A-41 29 430).

Der Nachteil einer solchen Schaltungsanordnung ist, daß bei hohen Gleichspannungszwischenkreis-Spannungen der durch das Umschalten der Halbbrückenschalter verursachte sprungförmige Anteil der Spannung über der Resonanzdrossel den durch die Resonanzstromschwingung definierten sinusförmigen Anteil der Spannung sehr stark überlagert. Dadurch ähnelt die Form des durch die Hilfswicklungen bereitgestellten Signals mehr einer Rechteckfunktion als einer Sinusfunktion. Der im Stand der Technik (DE-A-4 129 430) vorgeschlagene Phasenschieber arbeitet dadurch nur als Totzeitglied, dessen Kapazität während einer Hf-Periodendauer durch die sinusförmig abnehmende Sekundärspannung nicht mehr so schnell entladen wird, daß ein sicheres Ausschalten der Halbbrückenschalter während einer Laststromhalbwelle gewährleistet ist.

Aufgabe der Erfindung ist es, eine Schaltungsanordnung der eingangs genannten Art anzugeben, die ohne ein separates, kostenintensives Wickelteil (Sättigungsstromwandler, Übertrager mit definiertem Luftspalt) realisiert wird.

Die Aufgabe wird durch eine Schaltungsanordnung gelöst, die in den Ansprüchen definiert ist.

Die Erfindung ist mit einer Mehrzahl von Vorteilen verbunden.

Die erfindungsgemäße Schaltungsanordnung läßt sich relativ kostengünstig realisieren, da die Schaltungsanordnung nur preisgünstige, vollautomatisch fertigbare Wickelteile benötigt.

Die an sich bekannte Phasenschieberschaltung, die hohe Gleichspannungszwischenkreis-Spannungen nicht verarbeiten kann, wird erfindungsgemäß so weiter entwickelt, daß auch bei derartig kritischen Spannungen ein stabiler Betrieb der Gesamtanordnung aus Vorschaltgerät und Lampe gewährleistet ist.

Eine vorteilhafte Ausführungsform der erfindungsgemäßen Schaltungsanordnung ist dadurch gekennzeichnet, daß die Ansteuerschaltung einen LC-Parallelschwingkreis, bestehend aus einem Kondensator und einer diesen Kondensator entladenden Induktivität, parallel zu einem Zweig aufweist, der die Schaltstrecke zwischen Steuer- und Referenzelektroden eines Schaltelementes bildet und daß die strombegrenzende Resonanzinduktivität des Lastkreises eine Hilfswicklung trägt, die mit dem LC-Parallelschwingkreis über einen Widerstand galvanisch verbunden ist (vgl. Figuren 1, 3 - 13). Diese Energieeinkopplung aus dem Lastkreis in die Ansteuerschaltung mittels galvanischer Verbindung ist einfach zu realisieren und unabhängig von geometrischen Fertigungstoleranzen.

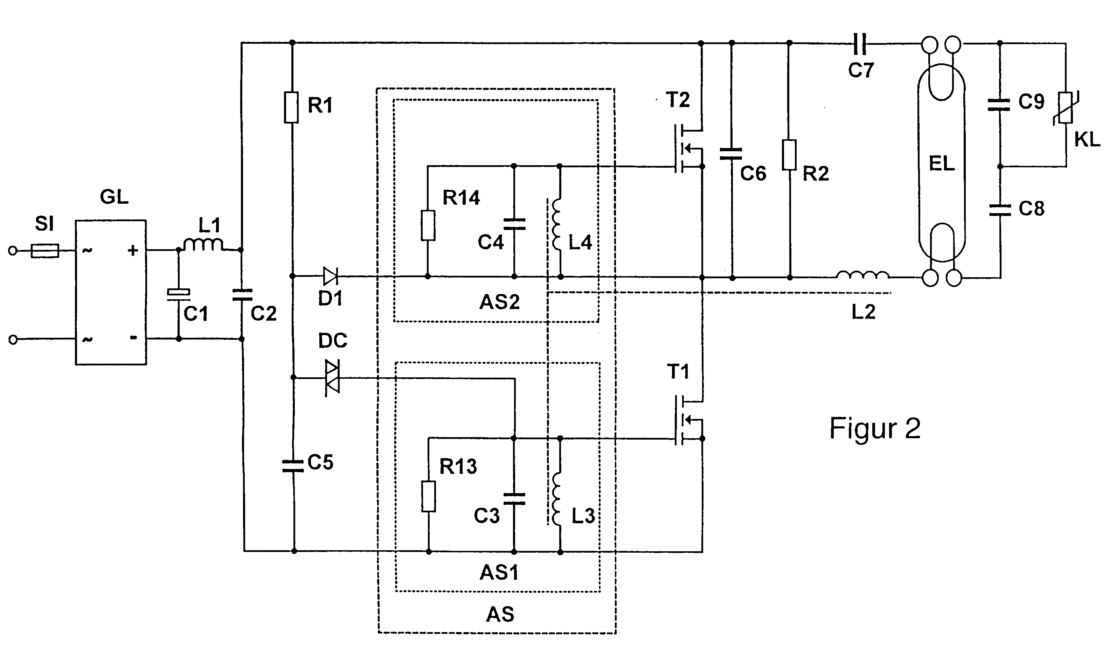

Eine andere vorteilhafte Ausführungsform der erfindungsgemäßen Schaltungsanordnung ist dadurch gekennzeichnet, daß die Ansteuerschaltung einen LC-Parallelschwingkreis, bestehend aus einem Kondensator und einer diesen Kondensator entladenden Induktivität, parallel zu einem Zweig aufweist, der die Schaltstrecke zwischen Steuer- und Referenzelektroden eines Schaltelementes bildet und einen Widerstand parallel zum LC-Parallelschwingkreis beinhaltet, wobei die Induktivität des LC-Parallelschwingkreises mit der einen strombegrenzenden Resonanzinduktivität des Lastkreises magnetisch gekoppelt ist (vgl. Figur 2). Bei dieser magnetischen Verkopplung zwischen der Induktivität des LC-Parallelschwingkreises und der Induktivität des Lastkreises kann auf die Hilfswicklungen auf der Induktivität des Lastkreises verzichtet werden, wodurch eine schnellere und preisgünstigere Fertigung erzielt wird. Außerdem vereinfacht sich die Leiterbahnführung auf der Platine.

Aus der EP-A-580 255 ist ein DC-AC Konverter zum Betrieb von elektrodenlosen Niederdruckentladungslampen mit einer strombegrenzenden Resonanzinduktivität und einem Übertrager mit Sekundärwicklungen bekannt. Der Kondensator des LC-Parallelschwingkreises im Sekundärkreis des Übertragers besitzt keine Entladefunktion.

Aus der DE-A-43 17 904 ist eine elektronische Vorschalt-Schaltung für Entladungslampen bekannt, bei der die Hilfswicklung nicht auf die strombegrenzende Resonanzinduktivität, sondern auf einen zusätzlichen Übertragungstrafo gewickelt ist.

Eine weitere vorteilhafte Ausführungsform der erfindungsgemäßen Schaltungsanordnung ist dadurch gekennzeichnet, daß die Induktivität des Lastkreises einen magnetischen Kreis mit eingefügtem Luftspalt aufweist und die Induktivität des LC-Parallelschwingkreises mit Außenluftspalt oder als Luftspule ausgeführt ist. Diese Ausführungsform der Induktivitäten des LC-Parallelschwingkreises und des Lastkreises ermöglichen eine optimale magnetische Verkopplung und eine preisgünstige Herstellung dieser Induktivitäten.

Eine weitere vorteilhafte Ausführungsform der erfindungsgemäßen Schaltungsanordnung ist dadurch gekennzeichnet, daß die Ansteuerschaltung aus schaltelementindividuellen Schaltungsteilen besteht, und daß jedes schaltelementindividuelle Schaltungsteil den LC-Parallelschwingkreis aufweist (vgl. Figur 1). Damit wird eine relativ schnelle Dimensionierung der Ansteuerungsbauelemente erzielt.

Weitere vorteilhafte Ausführungsformen der erfindungsgemäßen Schaltungsanordnung sind dadurch gekennzeichnet, daß einerseits die Eigenresonanzfrequenz der LC-Parallelschwingkreise jedes schaltelementindividuellen Schaltungsteils gleich ist, und daß andererseits die LC-Parallelschwingkreise jedes schaltelementindividuellen Schaltungsteils jeweils gleiche Induktivitäten und gleiche Kapazitäten aufweisen. Die vorgesehenen gleichen Eigenresonanzfrequenzen und Induktivitäten sowie Kapazitäten der LC-Parallelschwingkreise gewährleisten einen symmetrischen Betrieb der beiden Schaltelemente der Inverteranordnung.

Eine weitere vorteilhafte Ausführungsform der erfindungsgemäßen Schaltungsanordnung ist dadurch gekennzeichnet, daß die Induktivitäten mehrerer LC-Parallelschwingkreise magnetisch gekoppelt sind. Die magnetische Kopplung der Induktivitäten der LC-Parallelschwingkreise ermöglicht eine Verminderung des Einflusses von Fertigungstoleranzen (Toleranzen der Induktivitäten und Kapazitäten) in der Ansteuerschaltung.

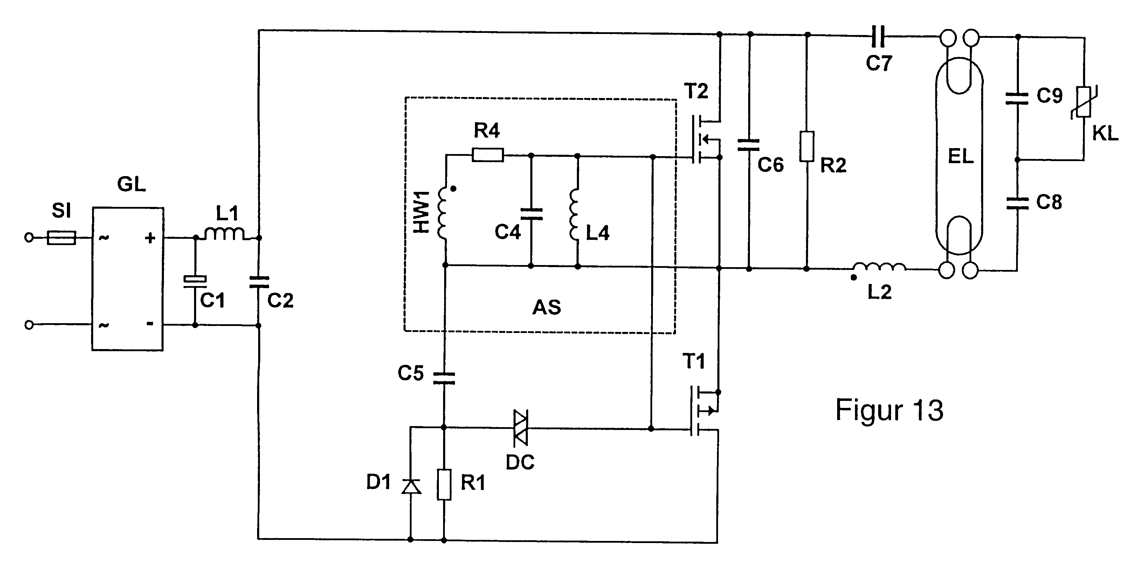

Eine weitere vorteilhafte Ausführungsform der erfindungsgemäßen Schaltungsanordnung ist dadurch gekennzeichnet, daß die Halbbrückenanordnung aus zwei zueinander komplementären Transistoren gebildet wird und daß die Ansteuerschaltung in der Weise ausgestaltet ist, daß der LC-Parallelschwingkreis einerseits an den Verbindungspunkt (Halbbrückenmittelpunkt) der beiden Schaltelemente und andererseits an die beiden miteinander verbundenen Steuereingänge der Schaltelemente geschaltet ist (vgl. Figur 13). Es genügt hier ein LC-Parallelschwingkreis, um beide Schaltelemente der Halbbrücke anzusteuern, ein weiteres Schaltelement wie z.B. ein Transformator wird nicht benötigt.

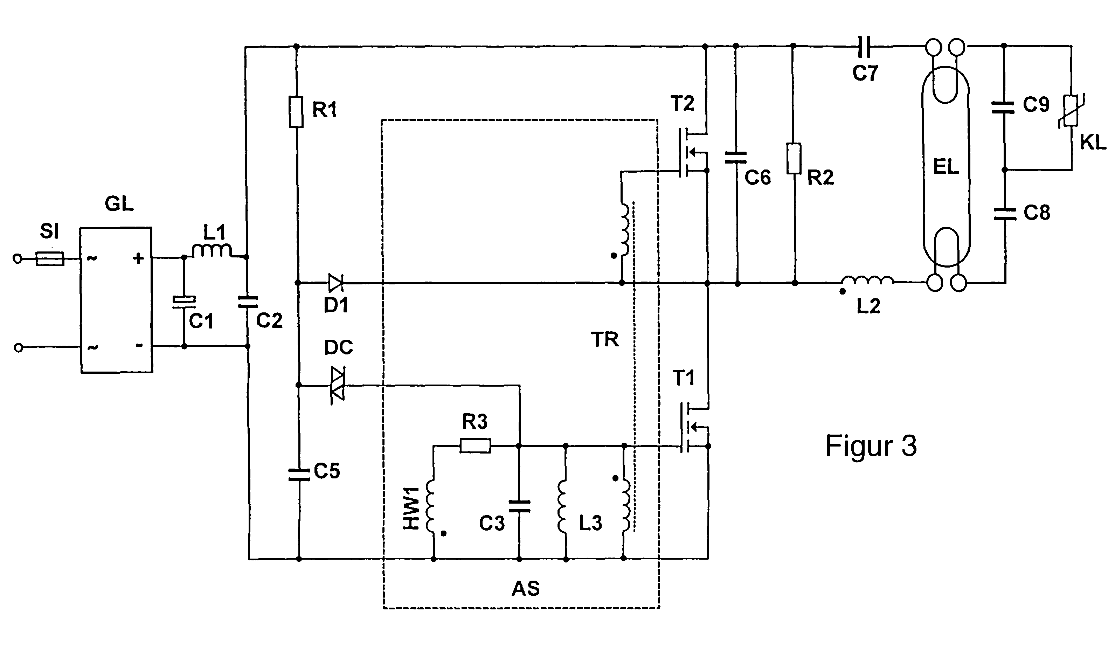

Eine weitere vorteilhafte Ausführungsform der erfindungsgemäßen Schaltungsanordnung ist dadurch gekennzeichnet, daß die Ansteuerschaltung ein weiteres Schaltelement aufweist, das ein von dem LC-Parallelschwingkreis gebildetes Ansteuerungssignal invertiert, und daß die Ansteuerschaltung weiterhin in der Weise ausgestaltet ist, daß jeweils einem Schaltelement das Ansteuerungssignal des LC-Parallelschwingkreises und dem anderen Schaltelement das invertierte Ansteuerungssignal des LC-Parallelschwingkreises zugeführt wird (vgl. Figur 3). Ein Vorteil dieser Ausführungsform besteht darin, daß keine Unsymmetrien im Betrieb der beiden Schaltelemente des Inverters auftreten bzw. daß sich die fertigungsbedingten Toleranzen bei den Bauteilen des LC-Parallelschwingkreises auf beide Schaltelemente gleichermaßen auswirken. Die Kosten für das weitere Schaltungsteil werden zum Teil dadurch kompensiert, daß auf der Induktivität des Lastkreises nur eine Hilfswicklung benötigt wird. Zudem kann das Schaltelement TR so ausgebildet sein, daß die Induktivität L3, L4 mit ersetzt wird.

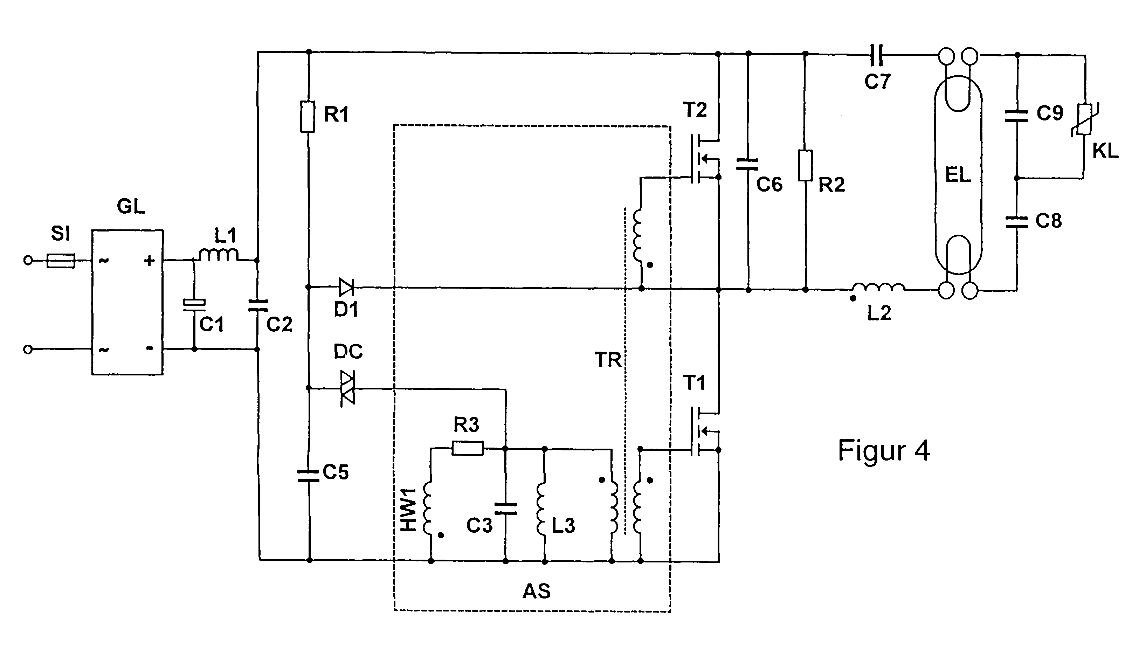

Eine weitere vorteilhafte Ausführungsform der erfindungsgemäßen Schaltungsanordnung ist dadurch gekennzeichnet, daß die Ansteuerschaltung ein weiteres Schaltungsteil aufweist, das an einem Ausgang ein von dem LC-Parallelschwingkreis gebildetes Ansteuerungssignal in invertierter Form und an einem weiteren Ausgang das Ansteuerungssignal des LC-Parallelschwingkreis in nicht invertierter Form erzeugt, und daß die Ansteuerschaltung weiterhin in der Weise ausgestaltet ist, daß der Steuereingang des einen Schaltelements mit einem Ausgang des Schaltelements und der Steuereingang des anderen Schaltelements mit dem anderen Ausgang des Schaltelements verbunden ist (vgl. Figur 4). Damit wird der weitere Vorteil erzielt, daß der LC-Parallelschwingkreis auf einem Bezugspotential liegen kann, das nicht zugleich ein Bezugspotential eines der beiden Schaltelemente ist.

Weitere vorteilhafte Ausführungsformen der erfindungsgemäßen Schaltungsanordnung sind dadurch gekennzeichnet, daß das weitere Schaltelement ein Transformator ist, wobei der Transformator eine oder mehrere Sekundärwicklungen aufweist, und wobei jeweils eine Sekundärwicklung mindestens einem Schaltelement des Inverters zugeordnet ist. Mit dem Transformator wird in einfacher Weise und zwar durch die Sekundärwicklungen die erforderliche galvanische Trennung der Ansteuersignale für die beiden Schaltelemente der Halbbrücke hergestellt.

Eine weitere vorteilhafte Ausführungsform der erfindungsgemäßen Schaltungsanordnung ist dadurch gekennzeichnet, daß der Widerstand, über den die Hilfswicklung mit dem LC-Parallelschwingkreis verbindbar ist, linear, nichtlinear oder temperaturabhängig ist. Während ein linearer Widerstand die kostengünstigste Ausführungsform für diesen Widerstand darstellt, ermöglicht die Verwendung eines nichtlinearen oder temperaturabhängigen Widerstands die Implementierung einer Anpassung der Ansteuerschaltung an bestimmte Umgebungszustände (z.B. hohe Umgebungstemperatur) oder Gesamtanordnungszustände (z.B. unübliche Lampenbrennspannung).

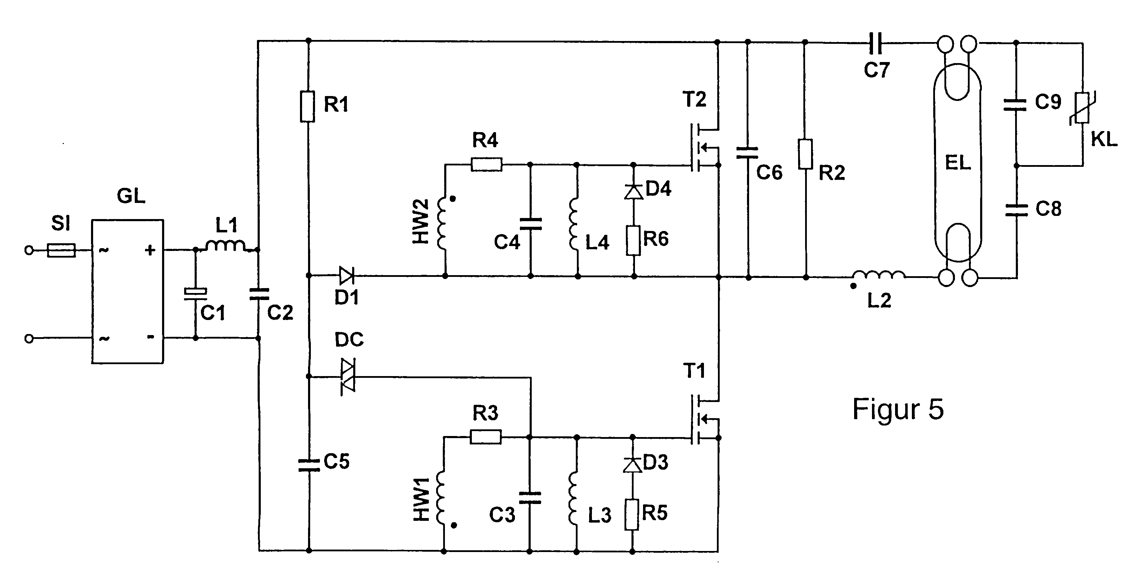

Eine weitere vorteilhafte Ausführungsform der erfindungsgemäßen Schaltungsanordnung ist dadurch gekennzeichnet, daß parallel zum LC-Parallelschwingkreis eine Serienschaltung aus einer Diode und einem Widerstand so geschaltet ist, daß diejenige Halbschwingung des LC-Parallelschwingkreises stärker bedämpft wird, bei der die Steuerspannung am Steuereingang eines Schaltelements des Inverters negativ ist, so daß die Totzeit der Halbbrücke verlängert wird (vgl. Figur 5). Ein Vorteil dieser Ausführungsform ist es, daß das Tastverhältnis der Schaltelemente in der Weise verändert wird, daß innerhalb einer Periodendauer die Zeit, in denen ein Schaltelement aktiviert ist, kürzer wird.

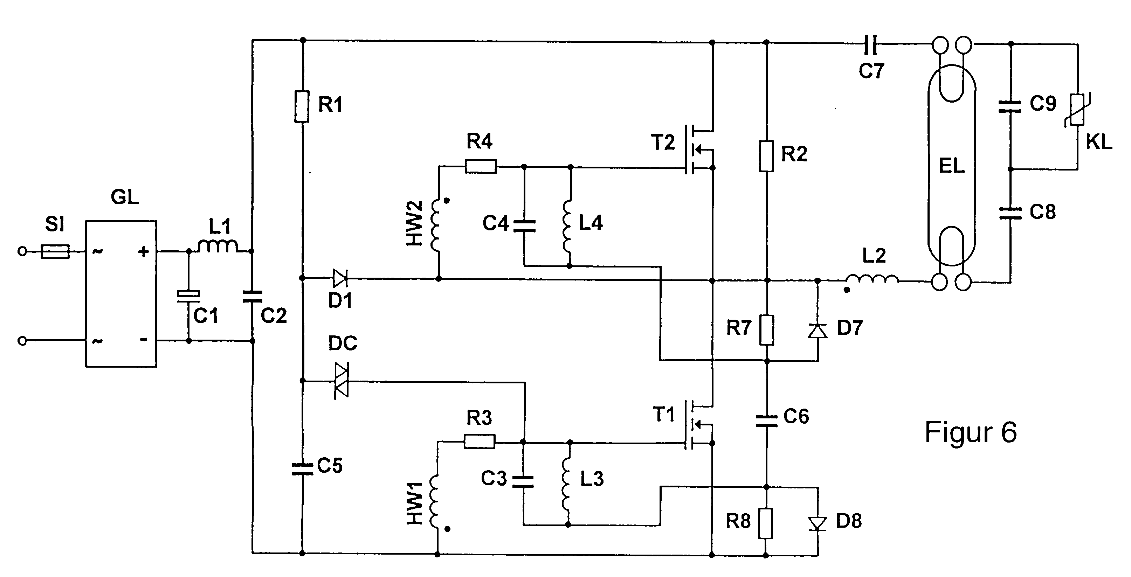

Eine weitere vorteilhafte Ausführungsform der erfindungsgemäßen Schaltungsanordnung ist dadurch gekennzeichnet, daß zwischen LC-Parallelschwingkreis und Schaltelement ein weiterer Widerstand angeordnet ist, der während der Umladephase eines Schaltentlastungs-Kondensators durch das Umladen dieses Kondensators einen Spannungsabfall erzeugt, der der Ansteuerungsspannung des LC-Parallelschwingkreis entgegenwirkt, so daß ein Einschalten des Schaltelements während dem Umladen des Schaltentlastungs-Kondensators verhindert wird (vgl. Figur 6). Ein Einschalten eines Schaltelements darf erst dann erfolgen, wenn die Freilaufdiode eines Schaltelements Strom führt. Dies ist bei dieser Ausführungsform der erfindungsgemäßen Schaltungsanordnung dann der Fall, wenn der Schaltentlastungskondensator nach dem Ausschalten des jeweils anderen Schaltelements vollständig umgeladen ist. Die vorliegende Ausführungsform ermöglicht es, den Einschaltzeitpunkt eines Schaltelements von der Dauer der Umladephase des Schaltentlastungskondensator abhängig zu machen.

In diesem Zusammenhang ist weiterhin vorgesehen, daß parallel zu dem weiteren Widerstand eine Diode so geschaltet ist, daß die Anode mit demjenigen Anschluß des LC-Parallelschwingkreises verbunden ist, der nicht mit dem Steuereingang des Schaltelements verbunden ist und die Kathode mit dem Bezugspotential des Schaltelements verbunden ist. Diese Diode ermöglicht ein schnelles Ausschalten der Schaltelemente.

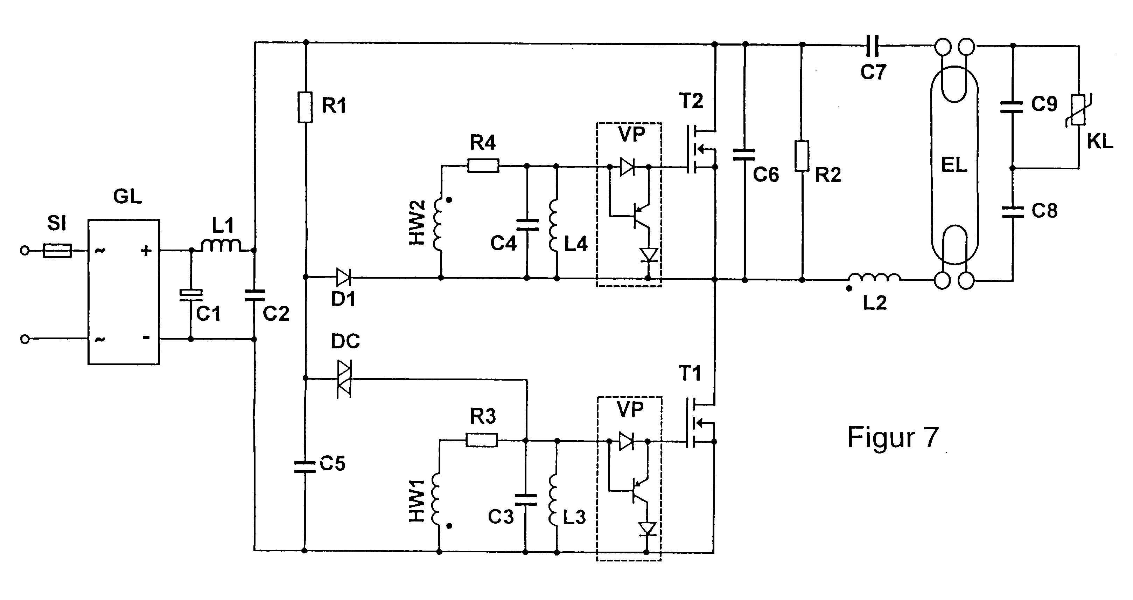

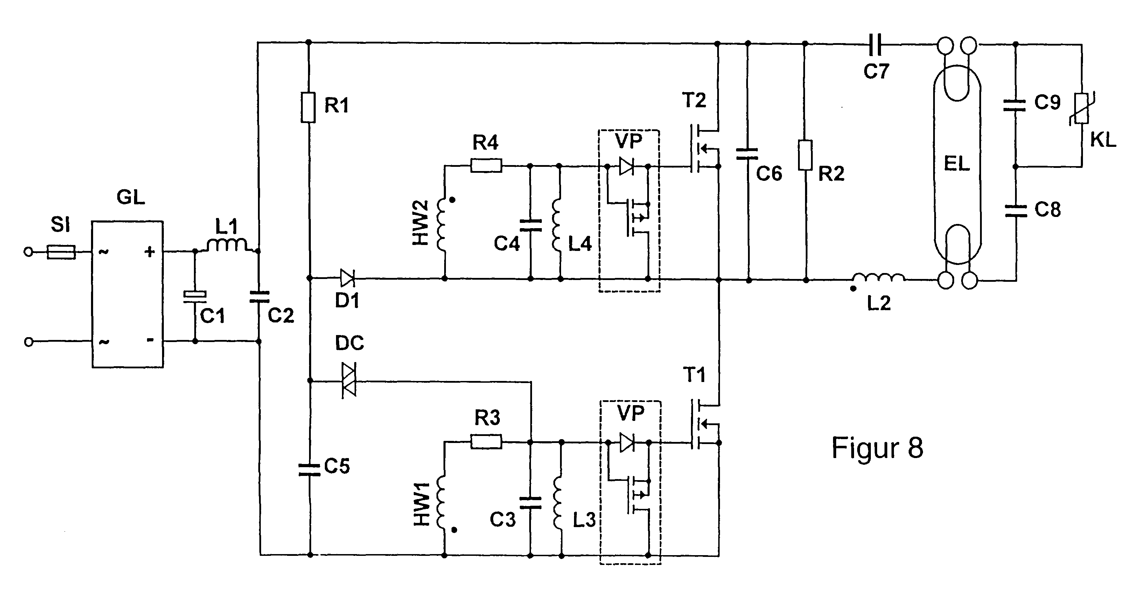

Eine weitere vorteilhafte Ausführungsform der erfindungsgemäßen Schaltungsanordnung ist dadurch gekennzeichnet, daß zwischen dem Steuereingang eines Schaltelements und dem entsprechenden LC-Parallelschwingkreis ein Impulsformungs- und Impedanzwandlervierpol eingeschleift ist, der das Ausschalten des Schaltelements beschleunigt (vgl. Figuren 7 und 8). Damit wird ein verbessertes Ausschaltverhalten der Schaltelemente und damit eine Minimierung der Schaltverluste erzielt.

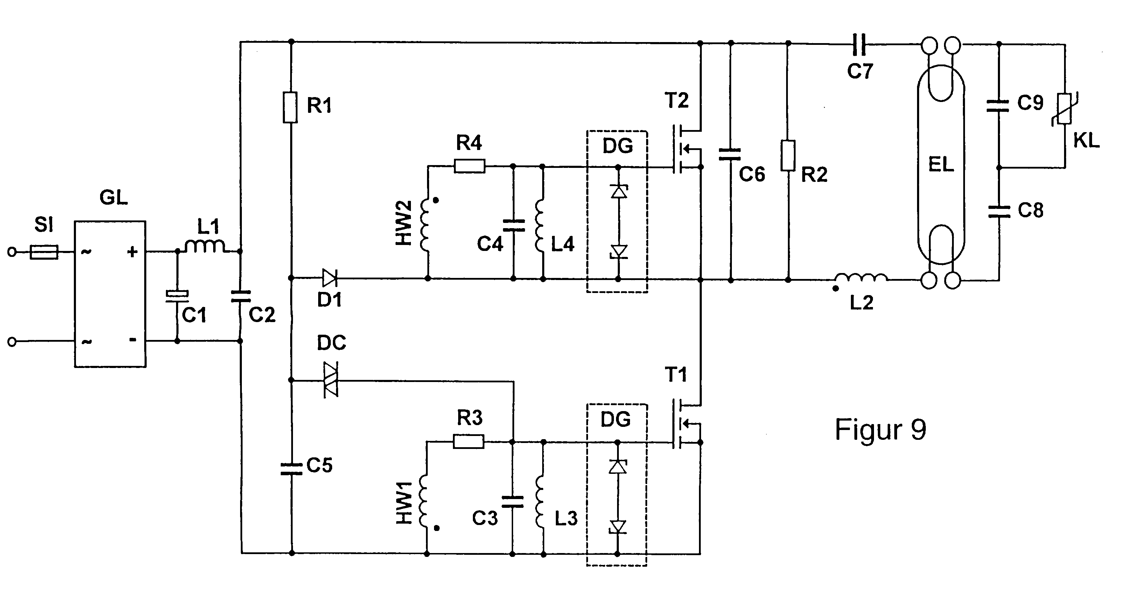

Eine weitere vorteilhafte Ausführungsform der erfindungsgemäßen Schaltungsanordnung ist dadurch gekennzeichnet, daß parallel zu dem LC-Parallelschwingkreis ein spannungsabhängiges Bedämpfungsglied angeordnet ist (vgl. Figur 9). Durch dieses Bedämpfungsglied wird der Steuereingang der Schaltelemente vor einer Spannungsüberlastung geschützt.

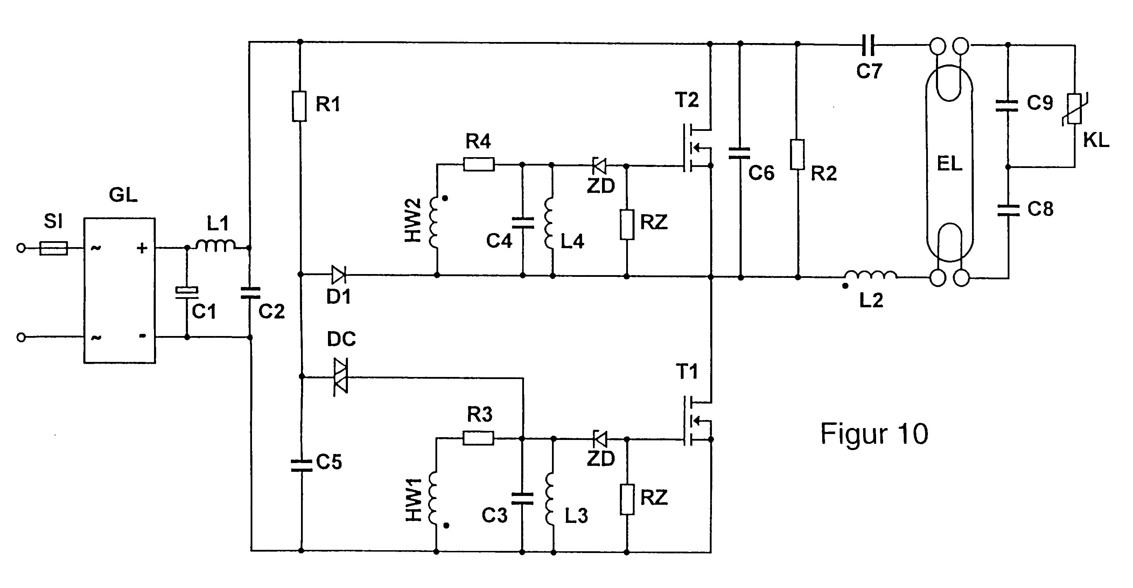

Eine weitere vorteilhafte Ausführungsform der erfindungsgemäßen Schaltungsanordnung ist dadurch gekennzeichnet, daß parallel zum LC-Parallelschwingkreis eine Serienschaltung aus einer Zenerdiode und einem Widerstand, der mit der Anode der Zenerdiode verbunden ist, geschaltet ist, und daß der Steuereingang des Schaltelements an die Anode der Zenerdiode, das Bezugspotential des Schaltelements an den Verbindungspunkt zwischen dem Widerstand und dem LC-Parallelschwingkreis geschaltet ist (vgl. Figur 10). Durch das Hinzufügen der Zenerdiode wird eine scheinbar höhere Schwellspannung des Schaltelements und damit eine Verkürzung der Zeit erreicht, in der das Schaltelement durch den LC-Parallelschwingkreis aktiviert ist.

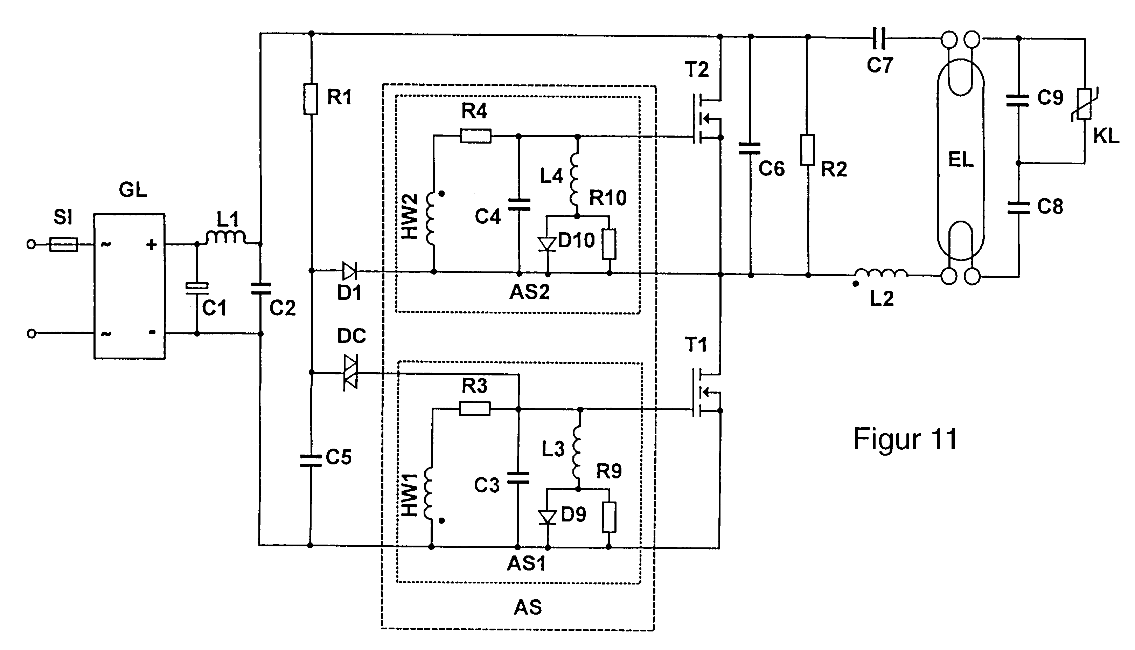

Diese Zeit wird weiter durch eine vorteilhafte Ausführungsform der erfindungsgemäßen Schaltungsanordnung verkürzt, die dadurch gekennzeichnet ist, daß in Serie zur Induktivität des LC-Parallelschwingkreises eine Parallelschaltung aus einer Diode und einem Widerstand so angeordnet ist, daß die Kathode der Diode und ein Anschluß des Widerstands an das Bezugspotential des Steuereingangs eines Schaltelements geschaltet sind und daß die Anode der Diode und der andere Anschluß des Widerstands mit der Induktivität des LC-Parallelschwingkreises verbunden sind oder die Anode der Diode und ein Anschluß des Widerstands mit dem Steuereingang eines Schaltelements und die Kathode der Diode und der andere Anschluß des Widerstands mit der Induktivität des LC-Parallelschwingkreises verbunden sind, wodurch ein durch die Größe des Widerstands einstellbarer negativer Gleichspannungsoffset der Ausgangsspannung des LC-Parallelschwingkreises bezogen auf den Steuereingang des Schaltelements erzielt wird (vgl. Figur 11).

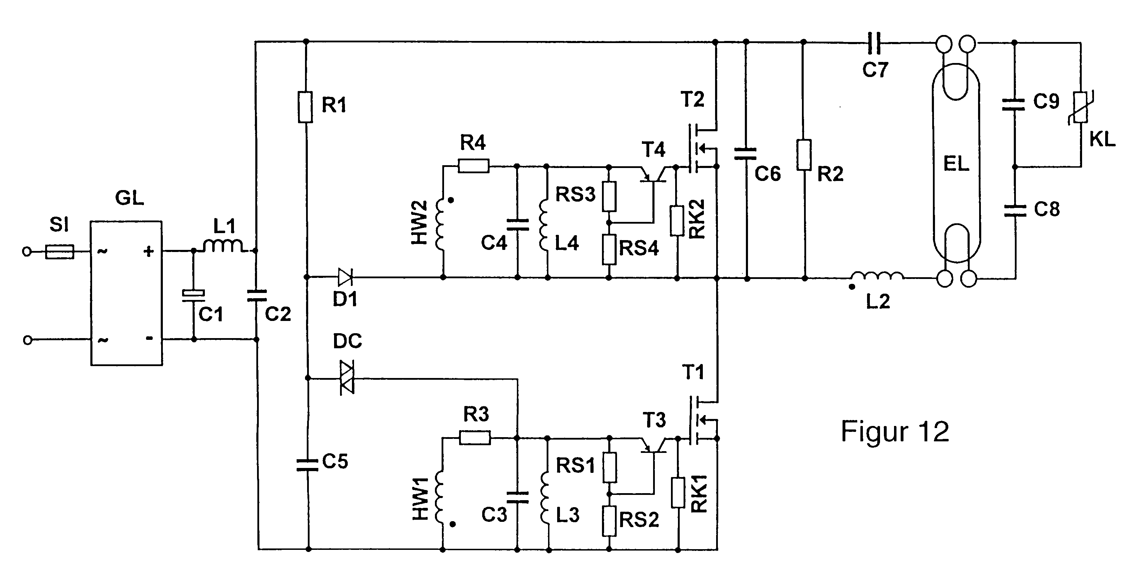

Eine weitere vorteilhafte Ausführungsform der erfindungsgemäßen Schaltungsanordnung ist dadurch gekennzeichnet, daß zwischen Steuereingang des Schaltelements und dem Bezugspotential für diesen Steuereingang ein Klemmwiderstand eingefügt ist und daß zur Verlängerung der Totzeit zwischen Steuerausgang des LC-Parallelschwingkreises und Schaltelement ein Widerstandsteiler und ein weiteres Schaltelement eingefügt werden, das die Ausgangsspannung des LC-Parallelschwingkreises erst dann an das Schaltelement legt, wenn die durch den Widerstandsteiler aus der Steuerspannung des LC-Parallelschwingkreises gebildete Steuerspannung für dieses weitere Schaltelement dessen Schwellspannung übersteigt und es einschaltet (vgl. Figur 12). Diese Ausführungsform ermöglicht eine aktive Verlängerung der Totzeit bis zu einem Phasenwinkel von 90 Grad (bezogen auf die Ansteuerspannung).

Schließlich ist eine weitere vorteilhafte Ausführungsform der erfindungsgemäßen Schaltungsanordnung, dadurch gekennzeichnet, daß die Schwellspannung der Schaltelemente in der Weise vorgebbar ist, daß eine vorgebbare Einschaltdauer der Schaltelemente realisierbar ist. Diese Ausführungsform, bei der die Schwellspannung der Schaltelemente einen unüblich hohen Wert annehmen kann, bietet den Vorteil, daß sich beim Einsatz dieser insoweit speziellen Schaltelemente hinsichtlich der Verlängerung der Totzeit $t_T$ die gleiche Wirkung wie bei anderen, schon genannten Ausführungsformen jedoch ohne zusätzliche Bauelemente erzielen läßt.

Die Erfindung wird nun anhand der nachfolgenden Figuren beschrieben:

Es zeigen

Figuren 1 - 13    Ausführungsformen der erfindungsgemäßen Schaltungsanordnung und

Figuren 14 - 17      den Verlauf ausgewählter Spannungen und Strömen in der erfindungsgemäßen Schaltungsanordnung.

In Figur 1 ist das Schaltbild einer Schaltungsanordnung mit einer Gegentakt-Halbbrücke zum Betrieb einer Niederdruckentladungslampe EL dargestellt. Direkt an den Netzeingang ist in eine Zuleitung eine Sicherung SI geschaltet. Anschließend folgt der Gleichrichter GL, dessen Ausgang durch einen Glättungskondensator C1 überbrückt ist, sowie ein Funkentstörungsglied aus einer Filterdrossel L1 in der positiven Zuleitung und einem Kondensator C2 parallel zum Glättungskondensator C1. Der selbststeuernde, freischwingende Inverter, hier eine Gegentakt-Halbbrücke, besteht aus den beiden Schaltelementen (vorzugsweise MOSFET-Transistoren oder IGBT-Transistoren mit Freilaufdiode) T1 und T2 und der Anlaufschaltung mit den Widerständen R1, R2, dem Kondensator C5, der Diode D1 und dem Diac DC. Die Lampe EL ist mit einem Anschluß der ersten Elektrode über eine Resonanzinduktivität L2 mit dem Mittenabgriff zwischen den beiden Transistoren T1, T2 und mit einem Anschluß der zweiten Elektrode über einen Koppelkondensator C7 mit dem Pluspol des Kondensators C2 verbunden.

Außerdem ist ein Serienresonanzkreis aus der Resonanzinduktivität L2, dem Koppelkondensator C7 und zwei Resonanzkondensatoren C8, C9 vorgesehen, wobei die beiden Resonanzkondensatoren C8, C9 in Reihe in den Heizkreis der Lampe EL geschaltet sind. Parallel zum Kondensator C9 ist außerdem ein Kaltleiter KL gelegt. Parallel zur Schaltstrecke des Transistors T2 ist zusätzlich zur Entlastung der Schaltelemente ein Kondensator C6 geschaltet.

Die Ansteuerung der Transistoren T1 und T2 erfolgt in an sich bekannter Weise bei dem in Figur 1 dargestellten Ausführungsbeispiel über Hilfswicklungen HW1 und HW2, die auf der Resonanzinduktivität L2 angebracht sind. Erfindungsgemäß wird zwischen die Hilfswicklungen HW1, HW2 und die Gate-Eingänge der Schaltelemente T1, T2 jeweils ein Netzwerk in Form eines LC-Parallelschwingkreises aus L3 bzw. L4 und C3 bzw. C4 und einem Vorwiderstand R3 bzw. R4 geschaltet. Durch diese schaltungstechnische Maßnahme wird erreicht, daß die Schaltung auch bei hohen Spannungen am Glättungskondensator C1 stabil arbeitet. Die Hilfswicklungen HW1 und HW2 haben bei dem in Figur 1 dargestellten Ausführungsbeispiel jeweils dieselbe Windungsanzahl $n_{HW1} = n_{HW2}$.

Bei dem in Figur 1 dargestellten Ausführungsbeispiel umfaßt die Ansteuerschaltung AS zur Ansteuerung der beiden Schaltelemente T1, T2 der Halbbrücke zwei schaltelementindividuelle Schaltungsteile AS1 und AS2. Allgemein ist erfindungsgemäß vorgesehen, daß die Ansteuerschaltung mindestens einen LC-Parallelschwingkreis aufweist.

Der LC-Parallelschwingkreis ist zur Energieeinkopplung aus dem Lastkreis mit einer Hilfswicklung HW1, HW2 auf der Induktivität L2 des Lastkreises über einen Widerstand R3, R4 galvanisch verbunden bzw. verbindbar.

In Figur 2 ist eine Ausführungsform der erfindungsgemäßen Schaltungsanordnung dargestellt. In dieser Schaltungsanordnung ist zur Energieeinkopplung aus dem Lastkreis in den LC-Parallelschwingkreis die Induktivität L3, L4 des LC-Parallelschwingkreises mit der Induktivität L2 des Lastkreises nur magnetisch gekoppelt, wobei parallel zu dem LC-Parallelschwingkreis ein Widerstand R13, R14 anschaltbar ist. Die magnetische Kopplung wird dadurch realisiert, daß die Induktivität L3, L4 in der Nähe der Induktivität L2 angeordnet wird.

In diesem Zusammenhang kann vorgesehen sein, daß die Induktivität L2 des Lastkreises, insbesondere durch Verwendung einer entsprechenden Kernbauform (z.B. "E-Kern") einen magnetisch geschlossenen Kreis mit eingefügtem Luftspalt aufweist. Die Induktivität L3, L4 des LC-Parallelschwingkreises ist dabei mit einem Außenluftspalt oder als Luftspule ausgeführt. Vorzugsweise werden die Induktivitäten L3, L4 durch eine Stabkerndrossel gebildet.

Erfindungsgemäß ist vorgesehen, daß die Ansteuerschaltung AS aus schaltelementindividuellen Schaltungsteilen AS1, AS2 besteht. Jedes schaltelementindividuelle Schaltungsteil weist dabei den LC-Parallelschwingkreis auf, wie dies in den Figuren 1 und 2 dargestellt ist.

Die Eigenresonanzfrequenz der LC-Parallelschwingkreise jedes schaltelementindividuellen Schaltungsteils ist vorzugsweise gleich.

Vorzugsweise ist auch vorgesehen, daß diese LC-Parallelschwingkreise jedes schaltelementindividuellen Schaltungsteils jeweils gleiche Induktivitäten und gleiche Kapazitäten aufweisen.

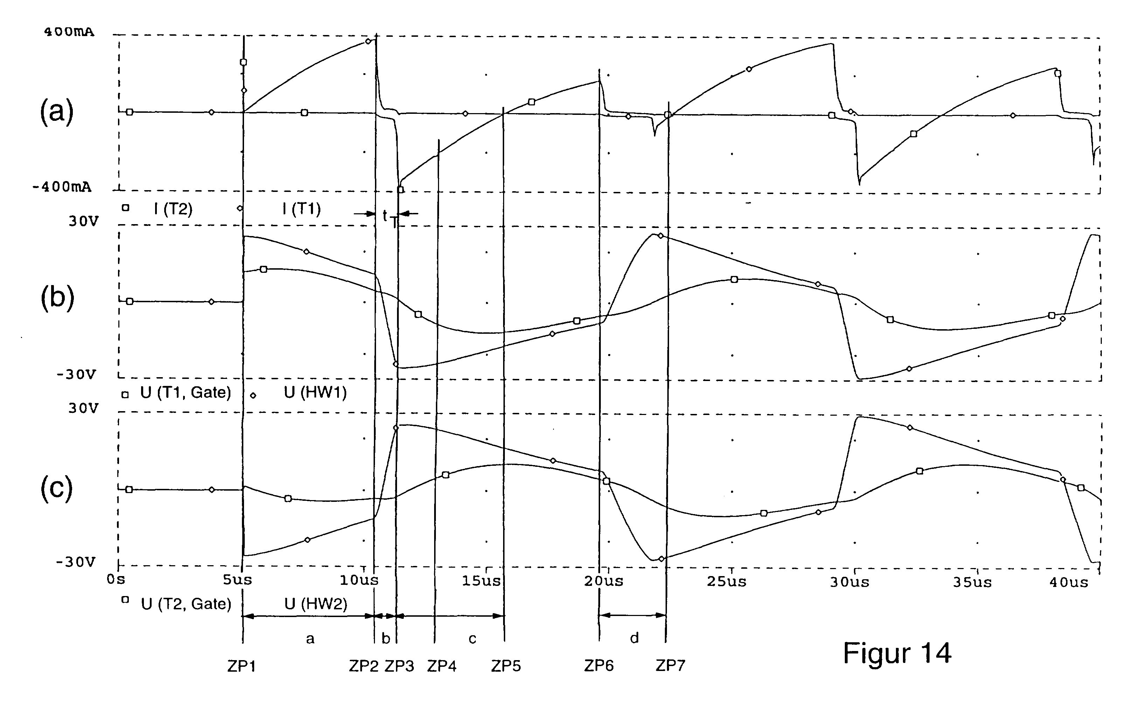

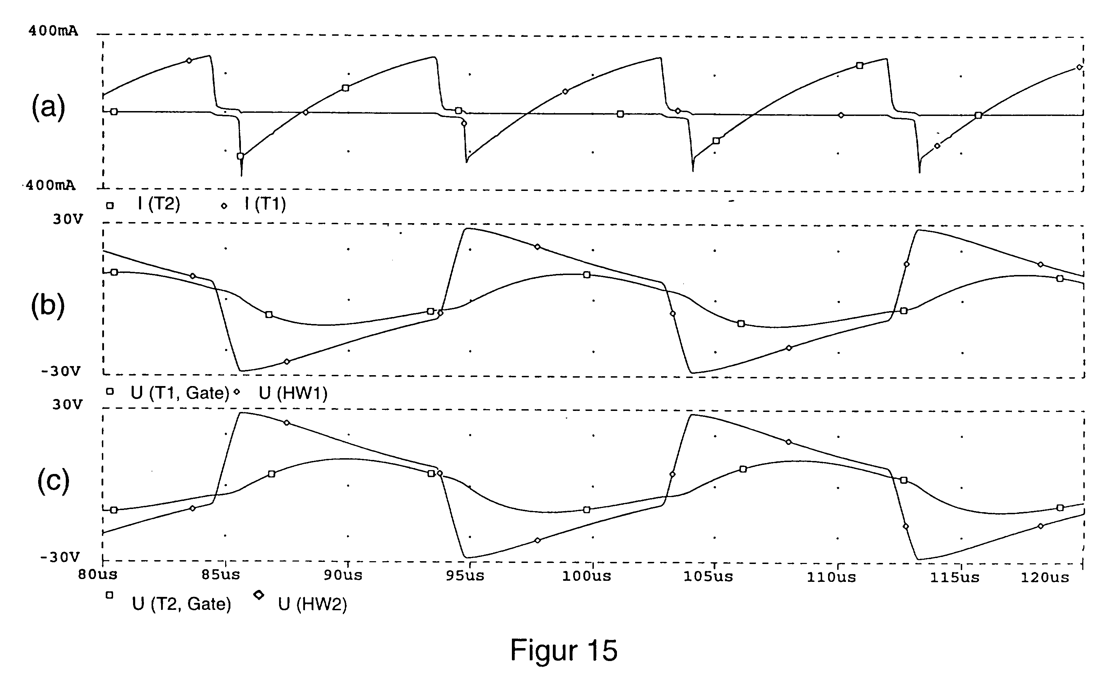

Der Verlauf der Spannungen und der Ströme in den beiden Schaltelementen T1, T2 der Halbbrücke wird nun anhand von Figur 14 und 15 beschrieben, wobei in Figur 14 die Spannungsverhältnisse U(T1, Gate), U(HW1); U(T2, Gate), U(HW2) in den beiden Ansteuerkreisen und die dazugehörigen Transistorströme I(T1), I(T2) während des Anlaufs und in Figur 15 für einen eingeschwungenen Zustand dargestellt sind.

Durch das erstmalige Anstoßen der Schaltung mittels des in Figur 1 dargestellten Diacs DC zum Zeitpunkt ZP1 (Figur 14) lädt sich der Kondensator C3 auf und schaltet den Transistor T1 durch. Dadurch springt an der Hilfswicklung HW1 die Spannung auf einen durch das Windungsverhältnis

$$\ddot{U} = \frac{n_{primär}}{n_{HW1}}$$

(= Verhältnis von der Anzahl $n_{primär}$ der Windungen der Primärwicklung der Drossel L2 zur Anzahl $n_{HW1}$ der Windungen der Hilfswicklung HW1 auf der Drossel L2) und die Zwischenkreis-Gleichspannung definierten Wert. In der Drossel L2 beginnt ein sinusförmiger Strom zu fließen.

Die Spannung über der Drossel L2 und damit über der Hilfswicklung HW1 nimmt nun gemäß

$$U(t) = - L \cdot \frac{dI(t)}{dt}$$

ab (Zeitbereich a zwischen den Zeitpunkten ZP1 und ZP2, Figur 14). Die Spannung an der Hilfswicklung HW1 bleibt jedoch trotz dieser Abnahme so groß, daß der Kondensator C3 über den Widerstand R3 weiter aufgeladen wird. In der Drossel L3 beginnt aufgrund der Spannung an C3 ein sinusförmig ansteigender Strom zu fließen, der die Kapazität C3 entlädt. Dadurch sinkt die Spannung am Steuereingang (Gate) des Transistors T1 ab, bis sie die Schwellspannung von T1 unterschreitet und T1 ausschaltet (Zeitpunkt ZP2, Figur 14).

Durch diesen Schaltvorgang kehrt der in der Drossel L2 eingeprägte Resonanzstrom die Spannung über der Drossel und damit über den Hilfswicklungen HW1, HW2 um. Die Kapazität C3 wird nun über R3 durch die Spannung an HW1 und den in der Drossel L3 des LC-Parallelschwingkreises eingeprägten Strom umgeladen, die Gate-Spannung von T1 wird negativ. Der zunächst durch HW2 über R4 negativ geladene Kondensator C4 wird nun über R4 von der Hilfswicklung HW2 aufgeladen, da die Spannung an HW2 während dem Umschalten der Halbbrücke (Zeitbereich b zwischen den Zeitpunkten ZP2 und ZP3, Figur 14) sprungartig ansteigt. Durch die Tiefpaß-Funktion von R4/C4 steigt die Spannung an C4, der Drossel L4 und damit auch am Gate von T2 sinusförmig an. Beim Überschreiten der Schwellspannung von T2 schaltet dieser ein (Zeitpunkt ZP4, Figur 14). Aufgrund der Phasenverschiebung zwischen dem Resonanzstrom in L2 und der Gate-Spannung an T2 erfolgt das Einschalten während die Freilaufdiode des Schaltelements T2 den Resonanzstrom führt (Zeitbereich c zwischen den Zeitpunkten ZP3 und ZP5, Figur 14). Die von der Hilfswicklung HW2 bereitgestellte Ansteuerspannung nimmt sinusförmig ab, trägt jedoch nicht oder nur wenig zur Entladung von C4 bei.

Die Drossel L4 entlädt nun den Kondensator C4, obwohl noch eine hohe Ansteuerspannung zur Verfügung steht und erzwingt durch den ihr eingeprägten Strom ein Umladen von C4 und damit ein sicheres und schnelles Ausschalten des Transistors T2 (Zeitpunkt ZP6, Figur 14). Durch das neuerliche Umschalten der Halbbrücke kehrt der in der Drossel L2 eingeprägte Resonanzstrom die Spannung über den Hilfswicklungen HW1 und HW2 sowie der Primärwicklung um. Die Kapazität C4 wird nun auch über R4 durch HW2 negativ, die Kapazität C3 über R3 durch HW1 positiv geladen (Zeitbereich d zwischen den Zeitpunkten ZP6 und ZP7, Figur 14). Dadurch wird wieder der Transistor T1 eingeschaltet und der beschriebene Vorgang beginnt wieder von vorn.

Wird zur Schaltentlastung der in den Figuren 1 - 13 dargestellte Kondensator C6 (parallel z.B. zum Transistor T2) eingesetzt, muß zwischen dem Ausschalten des einen und dem Einschalten des anderen Halbbrückentransistors eine ausreichende Totzeit $t_T$ (= Zeitbereich b = Dauer des Umladevorgangs im Kondensator C6) vorhanden sein.

Im Normalfall (Schaltentlastungskondensator C6 hat üblicherweise verwendete Kapazitätswerte) ergibt sich diese Totzeit aus der Tatsache, daß die Schwellspannung des einen Transistors unterschritten wird, bevor die Ausgangsspannung der zugehörigen Ansteuerschaltung zu Null wird, die dazu symmetrische Ausgangsspannung der anderen Ansteuerschaltung aber erst auf den Wert der Schwellspannung des einzuschaltenden Transistors ansteigen muß, ehe dieser tatsächlich leitend wird.

Figur 15 zeigt die Spannungs- und Stromverläufe der Ströme in den Schaltelementen T1, T2 sowie die Spannungen an den Hilfswicklungen und die Steuerspannungen der LC-Parallelschwingkreise im eingeschwungenen Zustand der Gesamtanordnung. Man erkennt, daß die genannten Spannungs- und Stromverläufe der schaltelementindividuellen Ansteuerschaltungen symmetrisch verlaufen.

Die in Figur 1 dargestellten Elemente des LC-Parallelschwingkreises unterliegen in der Praxis gewissen Fertigungstoleranzen. Diese wirken sich vor allem dann aus, wenn die Eigenresonanzfrequenzen

$$f_{res} = \frac{1}{2\pi \cdot \sqrt{L3/4 \cdot C3/4}}$$

der beiden Ansteuerschaltungen (AS1/AS2) stark differieren, weil man dann nicht mehr von zueinander symmetrischen Ansteuerspannungsverläufen in den beiden Ansteuerschaltungen AS1 und AS2 ausgehen kann.

Ausführungsformen der erfindungsgemäßen Schaltungsanordnung, welche insbesondere in den Figuren 5, 6, 10, 11 und 12 dargestellt sind, bewirken eine Vergrößerung der erzielbaren Totzeit beim Umschalten der Halbbrücke durch ein verzögertes Einschalten der Transistoren, um ein vollständiges Umladen der Schaltentlastungskapazität C6 durch die in der Drossel L2 gespeicherte Freilaufenergie zu gewährleisten.

Bei der in Figur 5 dargestellten Ausführungsform der erfindungsgemäßen Schaltungsanordnung wird je eine Serienschaltung aus einer Diode D3 bzw. D4 und einem Widerstand R5 bzw. R6 so parallel zu jedem der beiden LC-Schwingkreise geschaltet, daß nur die negative Halbwelle (negative Gate-Spannung) der Schwingung des LC Schwingkreises bedämpft wird.

Dies führt zu einer Verformung der Ansteuerspannungskurve, die eine kürzere positive Halbwelle mit höherer Amplitude und eine längere negative Halbwelle mit geringerer Amplitude aufweist und damit eine Verschiebung des Tastverhältnisses erreicht wird.

Eine weitere Ausführungsform einer Einschaltverzögerung, die die oben anhand der Figur 5 beschriebene Schaltungsanordnung auch ergänzen kann, ist in Figur 6 dargestellt.

In dieser Schaltungsanordnung wird der Strom im Schaltentlastungskondensator C6 durch zwei Widerstände R7, R8 erfaßt. Dazu wird eine Serienschaltung aus zwei Widerständen R7, R8 und dem Kondensator C6 parallel zum Transistor T1 so geschaltet, daß ein Widerstand R8 an dem Massepotential, der andere Widerstand R7 an dem Verbindungspunkt der beiden Schalttransistoren T1, T2 liegt und daß der Kondensator C6 zwischen den beiden Widerständen R7, R8 liegt. Den beiden Widerständen R7, R8 ist jeweils eine Diode D7, D8 parallelgeschaltet, deren Anode mit dem jeweiligen Anschluß des Schaltentlastungskondensators C6 verbunden sind.

Die LC-Parallelschwingkreise sind bei der in Figur 6 dargestellten Schaltungsanordnung nicht parallel zur Gate-Source-Strecke der Transistoren T1, T2 geschaltet, sondern mit einem Anschluß an das Gate des jeweiligen Transistors und dem anderen an die Kathoden der Dioden D7 (L4, C4) und D8 (L3, C3) geschaltet.

Bei eingeschaltetem Transistor T1 ist die Schaltentlastungskapazität C6 entladen. Sinkt nun die Gate-Spannung von T1 unter den gegebenen Schwellwert, schaltet T1 aus. Dies führt zu einem Aufladen von C6 und einem Spannungsabfall an R7 und R8.

Das Einschalten von T2 wird nun dadurch verzögert, daß von der Ansteuerspannung für T2, die die Ansteuerschaltung bestehend aus L4, C4, R4 und HW1 liefert, die Spannung subtrahiert wird, die am Widerstand R7 durch den Aufladevorgang von C6 abfällt.

Der Spannungsabfall an R8, der dem Ausschalten von T1 entgegenwirkt und dadurch ein sehr verlustbehaftetes Schalten verursachen würde, wird durch die Diode D8 auf deren Durchlaßspannung begrenzt.

Wenn die Gate-Spannung von T2 ihren Schwellwert unterschreitet, so schaltet T2 aus, die Kapazität C6 wird durch den in der Drossel L2 eingeprägten Strom wieder über die Widerstände R7 und R8 entladen. Der Spannungsabfall an R7 wird nun durch die Diode D7 auf deren Durchlaßspannung begrenzt, die Spannung an R8 wird von der am Transistor T1 angeordneten Ansteuerschaltung gelieferten Spannung subtrahiert, ein Einschalten von T1 wird dadurch verzögert.

Der Widerstand R3, R4 bzw. R13, R14 (Figur 5) kann linear, nichtlinear, oder temperaturabhängig sein. Dadurch ist es möglich, die Ansteuerung der beiden Schaltelemente von Umgebungsbedingungen oder Gesamtanordnungszuständen abhängig zu machen. Beispielsweise kann vorgesehen sein, daß bei sehr hohen Umgebungstemperaturen die Leistungsaufnahme der Gesamtanordnung dadurch reduziert wird, daß der Widerstand R3, R4, R13, R14 proportional zu einer Zunahme der Temperatur kleiner wird.

Die Verwendung eines nichtlinearen Widerstands kann vorgesehen werden, wenn die Ansteuerschaltung auf außergewöhnliche Betriebszustände (wie z.B. eine in der Serienfertigung unüblich hohe Brennspannung der Lampe) der Gesamtanordnung in der Weise reagieren soll, daß ein sicherer Betrieb auch in Ausnahmezuständen sichergestellt ist.

In den Figuren 3 und 4 sind weitere Ausführungsformen der erfindungsgemäßen Schaltungsanordnung dargestellt. In dieser Schaltungsanordnung weist die Ansteuerschaltung AS ein weiteres Schaltelement TR auf, das ein von dem LC-Parallelschwingkreis gebildetes Ansteuerungssignal invertiert. Dieses weitere Schaltelement TR ist vorzugsweise eine Transformator, wobei in diesen Transformator die Induktivität L3, L4 des LC-Parallelschwingkreises interpretiert sein kann. Die Ansteuerschaltung ist weiterhin in der Weise ausgestaltet, daß jeweils einem Schaltelement (z.B. T1) das Ansteuerungssignal des LC-Parallelschwingkreises und dem anderen Schaltelement (z.B. T2) das invertierte Ansteuerungssignal des LC-Parallelschwingkreises zugeführt wird. Damit treten keine Unsymmetrien im Betrieb der beiden Schaltelemente des Inverters auf. Fertigungsbedingte Toleranzen bei den Bauteilen des LC-Parallelschwingkreises wirken sich auf beide Schaltelemente T1, T2 gleichermaßen aus.

Wie in Figur 4 dargestellt, kann die Ansteuerschaltung in der Weise ausgestaltet sein, daß der Steuereingang des einen Schaltelements (z.B. T1) mit einem Ausgang des weiteren Schaltelements TR und der Steuereingang des anderen Schaltelements (z.B. T2) mit dem anderen Ausgang diese weiteren Schaltelements TR verbunden ist. Der LC-Parallelschwingkreis liegt auf einem Bezugspotential, das nicht zugleich ein Bezugspotential eines der beiden Schaltelemente T1, T2 ist.

Das weitere Schaltelement ist wie erwähnt z.B. ein Transformator, wobei der Transformator eine oder mehrere Sekundärwicklungen aufweist. Jeweils eine Sekundärwicklung ist mindestens einem Schaltelement des Inverters zugeordnet. Mit dem Transformator wird in einfacher Weise durch die Sekundärwicklungen die erforderliche galvanische Trennung der Ansteuersignale für die beiden Schaltelemente T1, T2 der Halbbrücke hergestellt.

Die Figuren 7 und 8 zeigen Ausführungsformen der erfindungsgemäßen Schaltungsanordnung, bei denen zwischen dem Steuereingang des Schaltelements T1, T2 und dem entsprechenden LC-Parallelschwingkreis ein Impulsformungs- und Impedanzwandlervierpol VP eingeschleift ist. Dieser Vierpol beschleunigt das Ausschalten des Schaltelements T1, T2.

In der Schaltungsanordnung nach Figur 7 ist der Impulsformungs- bzw. Impedanzwandlervierpol VP als Ausräumnetzwerk mit zwei Dioden und einem Bipolar-Kleinsignaltransistor ausgebildet.

Die in Figur 8 gezeigte Schaltungsvariante verwendet einen MOSFET-Transistor und eine Diode.

Die Diode des Vierpols VP, die zwischen den LC-Parallelschwingkreis und den Steuereingang des Schaltelements T1, T2 geschaltet ist, bildet bei der Abnahme der Ansteuerspannung des LC-Parallelschwingkreises durch den Aufbau einer Sperrspannung die Schwellspannung, die den jeweiligen Kleinsignaltransistor des Vierpols VP einschaltet. Dadurch wird die Eingangskapazität des Schaltelements T1, T2 schlagartig entladen und das Schaltelement ausgeschaltet.

Die weitere Diode in der bipolaren Ausführungsform des Vierpols (Figur 7) verhindert einen unerwünschten Stromfluß durch die Basis-Kollektor-Diode des Kleinsignaltransistors.

Figur 9 zeigt eine weitere Ausführungsform der Schaltungsanordnung, wobei parallel zu dem LC-Parallelschwingkreis ein spannungsabhängiges Bedämpfungsglied DG (vorzugsweise zwei antiseriell geschaltete Zenerdioden) zur Begrenzung der Steuerspannung des Schaltelements T1, T2 angeordnet ist. Durch diese Anordnung wird ein Überspannungsschutz für den Steuereingang der Schaltelemente erreicht.

Wie in Figur 10 dargestellt, kann alternativ oder zusätzlich zu den oben beschriebenen Ausführungsformen eine Zenerdiode ZD und ein Widerstand RZ so zwischen den Steuereingang des Schaltelements T1, T2 und den LC-Parallelschwingkreis geschaltet sein, daß zu der Schwellspannung des Schaltelements die Zenerspannung hinzuaddiert wird und somit erst eine höhere Ansteuerungsspannung des LC-Parallelschwingkreises zum Einschalten des Schaltelements T1 bzw. T2 führt.

Eine besonders preisgünstige Ansteuerschaltung AS ist in Figur 13 dargestellt. Durch die Verwendung von zueinander komplementären Schaltelementen (d.h.: T1 ist ein P-Kanal MOSFET und T2 ein N-Kanal MOSFET) genügt es, eine gemeinsame Ansteuerspannung für beide Schalttransistoren zu erzeugen. Mit der positiven Halbwelle der Ansteuerspannung des LC-Parallelschwingkreises wird das Schaltelement T2 aktiviert, mit der negativen Halbwelle wird das Schaltelement T2 aktiviert. Eine Totzeit (beide Schaltelemente ausgeschaltet) ergibt sich automatisch daraus, daß für Ansteuerspannungswerte, deren Betrag kleiner als die Schwellspannung der Schaltelemente ist, beide Schaltelemente ausgeschaltet sind.

Während bei der erfindungsgemäßen Schaltungsanordnung nach Fig. 5 eine zeitliche Streckung der negativen Halbwelle der Ansteuerungsspannung des LC-Parallelschwingkreises erzielt wird, kann im Gegensatz dazu mit der erfindungsgemäßen Schaltungsanordnung gemäß Figur 11 ein Gleichspannungsoffset der Ansteuerungsspannung des LC-Parallelschwingkreises erreicht werden, so daß die Amplitude der positiven Halbschwingung geringer als die der negativen ist.

Bei der Ausführungsform nach Figur 11 ist in Serie zur Induktivität L3, L4 des LC-Parallelschwingkreises eine Parallelschaltung aus einer Diode D9/D10 und einem Widerstand R9/R10 so angeordnet, daß die Kathode der Diode D9/D10 und ein Anschluß des Widerstands R9/R10 an das Bezugspotential des Steuereingangs des Schaltelements T1, T2 geschaltet ist. Die Anode der Diode D9/D10 und der andere Anschluß des Widerstands R9/R10 sind mit der Induktivität L3, L4 des LC-Parallelschwingkreises verbunden.

Alternativ hierzu sind die Anode der Diode D9/D10 und ein Anschluß des Widerstands R9/R10 mit dem Steuereingang des Schaltelements T1, T2 und die Kathode der Diode D9/D10 und der andere Anschluß des Widerstands (R9/R10) mit der Induktivität L3, L4 des LC-Parallelschwingkreises verbunden.

Dadurch wird ein durch die Größe des Widerstands R9/R10 einstellbarer negativer Gleichspannungsoffset $\overline{U}$ (T1, Gate), $\overline{U}$ (T2, Gate) der Ausgangsspannung des LC-Parallelschwingkreises bezogen auf den Steuereingang des Schaltelements T1, T2 und damit eine Verkürzung der positiven Pulsweite bei gleicher Periodendauer, die zur Aktivierung des Schaltelements führt, erzielt.

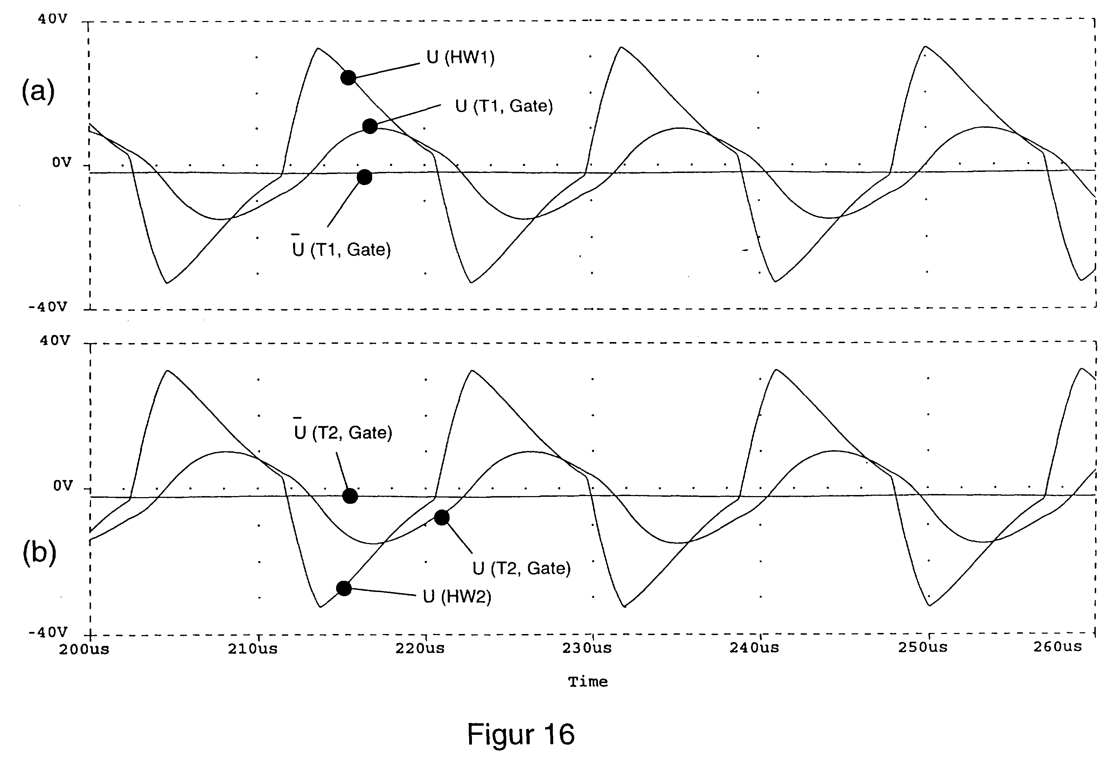

Die relevanten zeitlichen Spannungsverläufe für die in Figur 11 dargestellte Schaltungsanordnung zeigt Fig. 16. Dabei zeigt Figur 16a den Verlauf von U(T1, Gate), $\overline{U}$ (T1, Gate), U(HW1) und Figur 16b den Verlauf von U(T2, Gate), $\overline{U}$ (T2, Gate)und U(HW2). $\overline{U}$ (T$_x$, Gate) bezeichnet den zeitlichen Mittelwert der Ansteuerspannung U (T$_x$, Gate) der Schaltelemente T1, T2. Da an einer Drossel nur eine Gleichspannung anstehen kann, die ein die Drossel durchfließender Strom an deren ohmschen Widerstand erzeugt, beträgt der Spannungsabfall an der Induktivität des LC-Parallelschwingkreises L3, L4 im zeitlichen Mittel U$_L$ = 0 V. An dem Widerstand R9/R10 kann durch die Parallelschaltung einer Diode D9/D10 im zeitlichen Mittel nur eine negative Spannung stehen, die aufgrund der Maschenregel durch eine der Wechselspannung U$_c$(t) überlagerte Gleichspannung im Kondensator C3, C4 des LC-Parallelschwingkreises kompensiert wird.

Aufgrund der Kirchhoff'schen Gesetze spielt dabei die Anordnung der Parallelschaltung von R9/R10 und D9/D10 und der Induktivität des LC-Parallelschwingkreises L3, L4 innerhalb der Serienschaltung keine Rolle.

Durch diese überlagerte Gleichspannung stellt sich am Steuereingang der Halbbrückenschaltelemente ein Steuersignal ein, dessen Tastverhältnis kleiner als 50% bezogen auf eine zum Einschalten des Halbbrückenschaltelements ausreichende Spannung ist. Dies ist in Figur 16 dargestellt. Der zeitliche Mittelwert der Steuerspannung der gemäß Figur 11 ausgeführten Ansteuerschaltungteile AS1 und AS2 sind negativ, die Amplitude der positiven Halbwellen hat einen kleineren Betrag als die Amplitude der negativen Halbwellen.

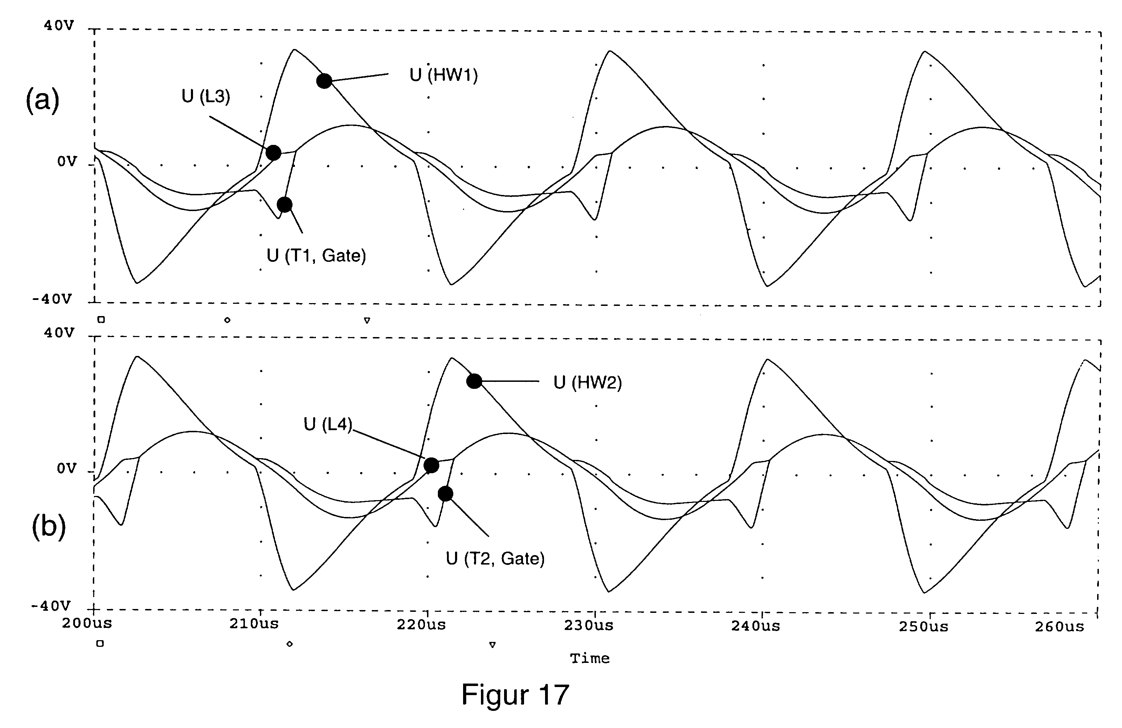

Eine weitere Schaltungsanordnung, die eine Verlängerung der Totzeit $t_T$ (beide $t_T$; Halbbrückenschaltelemente T1, T2 ausgeschaltet) bewirkt, ist in der Fig. 12 dargestellt. Die relevanten Spannungsverläufe für eine Schaltung nach Fig. 12 zeigt Fig. 17, wobei in Figur 17a U(HW1), U(T1, Gate) und U(L3) dargestellt ist, während in Figur 17b U(HW2), U(T2, Gate) und U(L4) dargestellt ist,

Bei der in der Figur 12 dargestellten Schaltungsanordnung ist zwischen Steuereingang eines Schaltelements T1, T2 und dem Bezugspotential für diesen Steuereingang ein Klemmwiderstand RK1, RK2 eingefügt. Zur Verlängerung der Totzeit ($t_T$; T1, T2 ausgeschaltet) ist zwischen Steuerausgang des LC-Parallelschwingkreises und Schaltelement T1, T2 ein Widerstandsteiler $R_{S1/S3}/R_{S2/S4}$ und ein weiteres Schaltelement T3, T4 eingefügt.

Als Schaltelement T3, T4 wird vorzugsweise ein PNP-Transistor verwendet, der in die Steuerleitung (Gateleitung) des Schaltelements T1, T2 eingefügt wird.

Alternativ hierzu kann als Schaltelement T3, T4 ein NPN-Transistor verwendet werden, der in die Leitung des Bezugspotentials des Steuereingangs (source) des Schaltelements T1, T2 so eingefügt wird, daß der Kollektor von T3, T4 mit dem Schaltelement T1, T2, der Emitter mit dem LC-Parallelschwingkreis und die Basis mit dem Mittenabgriff des Spannungsteilers RS1, RS2; RS3, RS4 verbunden ist.

Die Ansteuerungsspannung des LC-Parallelschwingkreises wird dabei erst dann an das Schaltelement T1, T2 gelegt, wenn die durch den Widerstandsteiler $R_{S1/S3}/R_{S2/S4}$ aus der Steuerspannung des LC-Parallelschwingkreises gebildete Steuerspannung für das Schaltelement T3, T4 die Einschaltschwelle (Schwellspannung) von T3, T4 übersteigt und diesen einschaltet (Figuren 12 und 17).

Der Steuertransistor T3, T4 ist also zwischen Ausgang des LC-Parallelschwingkreises und Steuereingang des Halbbrückenschaltelements T1, T2 geschaltet. Befindet sich der Steuertransistor T3, T4 im sperrenden Zustand, beträgt die Steuerspannung des Halbbrückenschaltelements T1, T2 0 Volt. Der Widerstand $R_{K1}/R_{K2}$ verhindert in diesem Fall ein Aufladen der Gate-Source-Kapazität (Eingangskapazität des Schaltelements T1, T2) und damit ein unbeabsichtigtes Einschalten des Halbbrückenschaltelements T1, T2 durch Fremdeinflüsse.

Steigt nun die Ansteuerungsspannung des LC-Parallelschwingkreises an, so steigt auch der Spannungsabfall an dem Widerstandsteiler $R_{S1/S3}/R_{S2}/_{S4}$ an. Durch Wahl des Verhältnisses von $R_{S1/S3}$ zu $R_{S2/S4}$ kann nun eingestellt werden, bei welcher Ausgangsspannung des LC-Parallelschwingkreises der Spannungsabfall am Steuerwiderstand $R_{S1/S3}$ groß genug wird, um den Steuertransistor T3, T4 einzuschalten. In diesem Betriebspunkt muß die Spannung an $R_{S1}$ bzw. $R_{S3}$ gerade so groß wie die Schwellspannung des Steuertransistors T3, T4 sein (bei einem bipolaren Kleinsignaltransistor ca. 0,6 Volt).

Die weiter ansteigende Ausgangsspannung des LC-Parallelschwingkreises wird nun über den eingeschalteten Steuertransistor T3, T4 an den Steuereingang des Halbbrückenschaltelements T1, T2 weitergeleitet, und zwar abzüglich der Durchlaßspannung des Steuertransistors T3, T4. Dies führt zu einem Einschalten des Halbbrückenschaltelements, T1, T2.

Der Widerstand $R_{K1}/R_{K2}$ ist so hochohmig gewählt, daß er keinen nennenswerten Einfluß auf die Steuerspannung hat bzw. den LC-Parallelschwingkreis nur vergleichsweise gering belastet.

Der Steuertransistor verharrt so lange im eingeschalteten Zustand, bis die Spannung am Steuerwiderstand $R_{S1}$ bzw. $R_{S3}$ die Schwellspannung wieder unterschreitet und die Basis-Kollektordiode des Steuertransistors vollständig ausgeräumt ist.

Das Halbbrückenschaltelement schaltet unabhängig von der Ausräumphase des Steuertransistors T3, T4 sicher aus, da die Ansteuerungsspannung des LC-Parallelschwingkreises kleiner als die zum Einschalten erforderliche Steuerspannung des Halbbrückenschaltelements T1, T2 wird.

Wie oben beschrieben, kann der Steuertransistor T3, T4 auch in die Leitung des Bezugspotentials des Steuereingangs des Halbbrückenschaltelements eingefügt werden. Dabei sind die Werte für den Widerstandsteiler $R_{S1/S3}/R_{S2/S4}$ so gewählt, daß der Spannungsabfall an dem Widerstand des Spannungsteilers, der zwischen Basis und Emitter von T3/T4 liegt, zum Einschalten des Steuertransistors T3, T4 führt.

Figur 13 zeigt eine erfindungsgemäße Schaltungsanordnung, bei der die Halbbrückenanordnung aus zwei zueinander komplementären Transistoren T1, T2 gebildet wird. Die Ansteuerschaltung AS ist in der Weise ausgestaltet, daß der LC-Parallelschwingkreis einerseits an den Verbindungspunkt (Halbbrückenmittelpunkt) der beiden Schaltelemente T1, T2 und andererseits an die beiden miteinander verbundenen Steuereingänge der Schaltelemente geschaltet ist. Bei dieser Ausführungsform genügt ein LC-Parallelschwingkreis, um beide Schaltelemente T1, T2 der Halbbrücke anzusteuern; ein weiteres Schaltelement wie z.B. ein Transformator wird nicht benötigt.

Die oben beschriebenen Schaltungsanordnungen sind vorzugsweise mit einer Halbbrückenanordnung ausgestattet; es können aber auch andere gängige freischwingende Inverter wie z. B. asymmetrische Halbbrücken- oder , Vollbrücken zum Einsatz kommen.

Im folgenden sind die Schaltelemente für eine Schaltungsanordnung nach Figur 1 zum Betrieb einer Lampe mit einer Leistungsaufnahme von 20 Watt an einem 230 Volt-Wechselstromnetz zusammengestellt:

| | |
|---|---|
| SI | ELDUR:KPSO 3/46 |
| GL | 1A; 600 V |
| C1 | 10 mF; 350 V Elektrolytkondensator |
| C2 | 220 nF; 350 V; MKT |
| C3 / C4 | 3,3 nF,;63 V; MKT |
| C5 | 100 nF; 63 V; MKT |
| C6 | 1 nF; 630 V; MKP |
| C7 | 47 nF; 350 V; MKT |
| C8 | 10 nF; 500 V; MKT |
| C9 | 4,7 nF; 630 V; MKT |
| L1 | Stabkerndrossel 1,5 mH |
| L2, HW1, HW2 | $L_{prim}$=2,6 mH; $n_{prim}$=240,5; $n_{HW1/2}$=18; EF16 |
| L3 / L4 | Stabkerndrossel 4,7 mH |
| R1 | 470 kW; 0,6 W |
| R2 | 470 kW; 0,6 W |
| R3 / R4 | 2,2 kW; 0,6 W |
| KL | Siemens PTC S1380 |
| T1 / T2 | FET 500V; 6W; SSU1N50; STK2N50 |
| D1 | 1N4004, 1N4005, 1N4006, 1N4007 |
| DC | Diac DB3N (SGS-Thomson) |

**Patentansprüche**

1. Schaltungsanordnung zum Betrieb einer Lampe (EL), insbesondere einer Niederdruckentladungslampe, mit einem Lastkreis, der mindestens eine strombegrenzende Resonanzinduktivität (L2) und mindestens einen Kondensator (C7, C8, C9) aufweist, sowie mit einem freischwingenden Inverter, der als Halb- oder Vollbrückenschaltung mit mindestens zwei Schaltelementen (T1, T2) ausgebildet ist, und mit einer Ansteuerschaltung (AS) zur Ansteuerung der Schaltelemente (T1, T2), dadurch gekennzeichnet, daß die Ansteuerschaltung (AS) einen LC-Parallelschwingkreis (L3, C3; L4, C4), bestehend aus einem Kondensator (C3, C4) und einer diesen Kondensator (C3, C4) entladenden Induktivität (L3, L4), parallel zu einem Zweig aufweist, der die Schaltstrecke zwischen Steuer- und Referenzelektroden eines Schaltelementes (T1, T2) bildet und daß die strombegrenzende Resonanzinduktivität (L2) des Lastkreises eine Hilfswicklung (HW1, HW2) trägt, die mit dem LC-Parallelschwingkreis (L3, C3; L4, C4) über einen Widerstand (R3, R4) galvanisch verbunden ist (Figuren 1, 3 - 13).

2. Schaltungsanordnung zum Betrieb einer Lampe (EL), insbesondere einer Niederdruckentladungslampe, mit einem Lastkreis, der mindestens eine strombegrenzende Resonanzinduktivität (L2) und mindestens einen Kondensator (C7, C8, C9) aufweist, sowie mit einem freischwingenden Inverter, der als Halb- oder Vollbrückenschaltung mit mindestens zwei Schaltelementen (T1, T2) ausgebildet ist, und mit einer Ansteuerschaltung (AS) zur Ansteuerung der Schaltelemente (T1, T2), dadurch gekennzeichnet, daß die Ansteuerschaltung (AS) einen LC-Parallelschwingkreis (L3, C3; L4, C4), bestehend aus einem Kondensator (C3, C4) und einer diesen Kondensator entladenden Induktivität (L3, L4), parallel zu einem Zweig aufweist, der die Schaltstrecke zwischen Steuer- und Referenzelektroden eines Schaltelementes (T1, T2) bildet und einen Widerstand (R13, R14) parallel zum LC-Parallelschwingkreis (L3, C3; L4, C4) beinhaltet, wobei die Induktivität (L3, L4) des LC-Parallelschwingkreises mit der einen strombegrenzenden Resonanzinduktivität (L2) des Lastkreises magnetisch gekoppelt ist (Figur 2).

3. Schaltungsanordnung nach einem der Ansprüche 1 oder 2, dadurch gekennzeichnet, daß die Induktivität (L2) des Lastkreises einen magnetischen Kreis mit eingefügtem Luftspalt aufweist und die Induktivität (L3, L4) des LC-Parallelschwingkreises mit Außenluftspalt oder als Luftspule ausgeführt ist.

4. Schaltungsanordnung nach einem der vorstehenden Ansprüche, dadurch gekennzeichnet, daß die Ansteuerschaltung (AS) aus schaltelementindividuellen Schaltungsteilen (AS1, AS2) besteht, und jedes schaltelementindividuelle Schaltungsteil (AS1, AS2) einen LC-Parallelschwingkreis aufweist (Figur 1).

5. Schaltungsanordnung nach Anspruch 4, dadurch gekennzeichnet, daß die Eigenresonanzfrequenz der LC-Parallelschwingkreise (L3, C3; L4, C4) jedes schaltelementindividuellen Schaltungsteil (AS1, AS2) gleich ist.

6. Schaltungsanordnung nach einem der Ansprüche 4 oder 5, dadurch gekennzeichnet, daß die LC-Parallelschwingkreise (L3, C3; L4, C4) jedes schaltelementindividuellen Schaltungsteil (AS1, AS2) jeweils gleiche Induktivitäten (L3, L4) und gleiche Kapazitäten (C3, C4) aufweisen.

7. Schaltungsanordnung nach einem der vorstehenden Ansprüche, dadurch gekennzeichnet, daß die Induktivitäten mehrerer LC-Parallelschwingkreise magnetisch gekoppelt sind.

8. Schaltungsanordnung nach Anspruch 1, dadurch gekennzeichnet, daß im Falle einer Halbbrückenschaltung die zwei Schaltelemente (T1, T2) aus zwei zueinander komplementären Transistoren gebildet sind und daß die Ansteuerschaltung (AS) in der Weise ausgestaltet ist, daß der LC-Parallelschwingkreis einerseits an den Verbindungspunkt der beiden Schaltelemente (T1, T2) und andererseits an die beiden miteinander verbundenen Steuereingänge der Schaltelemente (T1, T2) geschaltet ist (Figur 13).

9. Schaltungsanordnung nach einem der Ansprüche 1 bis 3, dadurch gekennzeichnet, daß die Ansteuerschaltung (AS) neben dem Parallelschwingkreis ein weiteres Schaltungsteil (TR) aufweist, das ein von dem LC-Parallelschwingkreis gebildetes Ansteuerungssignal invertiert, und daß die Ansteuerschaltung weiterhin in der Weise ausgestaltet ist, daß jeweils einem Schaltelement (T1) das Ansteuerungssignal des LC-Parallelschwingkreises und dem anderen Schaltelement (T2) das invertierte Ansteuerungssignal des LC-Parallelschwingkreises zugeführt wird (Figur 3).

10. Schaltungsanordnung nach einem der Ansprüche 1 bis 3, dadurch gekennzeichnet, daß die Ansteuerschaltung (AS) neben dem Parallelschwingkreis ein weiteres Schaltungsteil (TR) aufweist, das an einem ersten Ausgang ein von dem LC-Parallelschwingkreis gebildetes Ansteuerungssignal in invertierter Form und an einem zweiten Ausgang das Ansteuerungssignal des LC-Parallelschwingkreises in nicht invertierter Form erzeugt, und daß die Ansteuerschaltung (AS) weiterhin in der Weise ausgestaltet ist, daß der Steuereingang des einen Schaltelements (T2) mit dem ersten Ausgang des Schaltungsteil (TR) und der Steuereingang des anderen Schaltelements (T1) mit dem zweiten Ausgang des Schaltungsteils (TR) verbunden ist (Figur 4).

11. Schaltungsanordnung nach einem der Ansprüche 9 oder 10, dadurch gekennzeichnet, daß das weitere Schaltungsteil (TR) ein Transformator ist.

12. Schaltungsanordnung nach Anspruch 11, dadurch gekennzeichnet, daß der Transformator eine oder mehrere Sekundärwicklungen aufweist, und daß jeweils eine Sekundärwicklung mindestens einem Schaltelement (T1, T2) der freischwingenden Halb- oder Vollbrückenschaltung zugeordnet ist.

13. Schaltungsanordnung nach Anspruch 1 oder 2, dadurch gekennzeichnet, daß der Widerstand (R3, R4; R13, R14) linear, nichtlinear oder temperaturabhängig ist.

14. Schaltungsanordnung nach einem der vorstehenden Ansprüche, dadurch gekennzeichnet, daß parallel zum LC-Parallelschwingkreis eine Serienschaltung aus einer Diode (D3, D4) und einem Widerstand (R5, R6) so geschaltet ist, daß diejenige Halbschwingung des LC-Parallelschwingkreises stärker bedämpft wird, bei der die Steuerspannung am Steuereingang eines Schaltelements (T1, T2) der Halb- oder Vollbrückenschaltung negativ ist, so daß eine Totzeit ($t_T$) der Halbbrücke (T1, T2 ausgeschaltet) verlängert wird (Figur 5).

15. Schaltungsanordnung nach einem der Ansprüche 1 bis 9, dadurch gekennzeichnet, daß zwischen LC-Parallelschwingkreis und Schaltelement (T1, T2) ein weiterer Widerstand (R7, R8) angeordnet ist, der während der Umladephase eines Schaltentlastungs-Kondensators (C6) durch das Umladen dieses Kondensators (C6) einen Spannungsabfall erzeugt, der der Ansteuerungsspannung des LC-Parallelschwingkreis entgegenwirkt, so daß ein Einschalten des Schaltelements (T1, T2) während dem Umladen des Schaltentlastungs-Kondensators (C6) verhindert wird (Figur 6).

16. Schaltungsanordnung nach Anspruch 15, dadurch gekennzeichnet, daß parallel zu dem weiteren Widerstand (R7, R8) eine Diode (D7, D8) so geschaltet ist, daß deren Anode mit demjenigen Anschluß des LC-Parallelschwingkreises verbunden ist, der nicht mit dem Steuereingang des Schaltelements (T1, T2) verbunden ist, und daß deren Kathode mit dem Bezugspotential des Schaltelements (T1, T2) verbunden ist.

17. Schaltungsanordnung nach einem der Ansprüche 1 bis 15, dadurch gekennzeichnet, daß zwischen dem Steuereingang eines Schaltelements und dem entsprechenden LC-Parallelschwingkreis ein Impulsformungs- und Impedanzwandlervierpol (VP) eingeschleift ist, der das Ausschalten des Schaltelements beschleunigt (Figur 7 und 8).

18. Schaltungsanordnung nach einem der Ansprüche 1 bis 15, dadurch gekennzeichnet, daß parallel zu dem LC-Parallelschwingkreis ein spannungsabhängiges Bedämpfungsglied (DG) angeordnet ist (Figur 9).

19. Schaltungsanordnung nach einem der Ansprüche 1 bis 15, dadurch gekennzeichnet, daß parallel zum LC-Parallelschwingkreis eine Serienschaltung aus einer Zenerdiode (ZD) und einem Widerstand (RZ), der mit der Anode der Zenerdiode verbunden ist, geschaltet ist und daß der Steuereingang des Schaltelements (T1, T2) an die Anode der Zenerdiode und das Bezugspotential des Schaltelements (T1, T2), an den Verbindungspunkt zwischen dem Widerstand (RZ) und dem LC-Parallelschwingkreis geschaltet ist (Figur 10).

20. Schaltungsanordnung nach einem der Ansprüche 1 bis 13, dadurch gekennzeichnet, daß in Serie zur Induktivität (L3, L4) des LC-Parallelschwingkreises eine Parallelschaltung aus einer Diode (D9, D10) und einem Widerstand (R9, R10) so angeordnet ist, daß die Kathode der Diode (D9, D10) und ein Anschluß des Widerstands (R9, R10) an das Bezugspotential des Steuereingangs eines Schaltelements (T1, T2) geschaltet sind und daß die Anode der Diode (D9, D10) und der andere Anschluß des Widerstands (R9, R10) mit der Induktivität (L3, L4) des LC-Parallelschwingkreises verbunden sind oder die Anode der Diode (D9, D10) und ein Anschluß des Widerstands (R9, R10) mit dem Steuereingang eines Schaltelements (T1, T2) und die Kathode der Diode (D9, D10) und der andere Anschluß des Widerstands (R9, R10) mit der Induktivität (L3, L4) des LC-Parallelschwingkreises verbunden sind, wodurch ein durch die Größe des Widerstands (R9, R10) einstellbarer negativer Gleichspannungsoffset der Ansteuerungsspannung des LC-Parallelschwingkreises bezogen auf den Steuereingang des Schaltelements (T1, T2) erzielt wird (Fig. 11).

21. Schaltungsanordnung nach Anspruch 1 bis 13, dadurch gekennzeichnet, daß zwischen Steuereingang des Schaltelements und dem Bezugspotential für diesen Steuereingang ein Klemmwiderstand (RK1, RK2) eingefügt ist und daß zur Verlängerung der Totzeit ($t_T$; T1, T2 ausgeschaltet) zwischen Steuerausgang des LC-Parallelschwingkreises und Schaltelement (T1, T2) ein Widerstandsteiler (RS1, RS2, RS3, RS4) und ein weiteres Schaltelement (T3, T4) eingefügt werden, welches Schaltelement die Ansteuerungsspannung des LC-Parallelschwingkreises erst dann an das Schaltelement (T1, T2) legt, wenn die durch den Widerstandsteiler (RS1, RS2, RS3, RS4) aus der Ansteuerungsspannung des LC-Parallelschwingkreises gebildete Steuerspannung für dieses weitere Schaltelement (T3, T4) dessen Schwellspannung übersteigt und es einschaltet (Fig. 12).

22. Schaltungsanordnung nach einem der vorstehenden Ansprüche, dadurch gekennzeichnet, daß die Schwellspannung der Schaltelemente (T1, T2) in der Weise vorgebbar ist, daß eine vorgebbare Einschaltdauer der Schaltelemente realisierbar ist.

**Claims**

1. Circuit arrangement for operating a lamp (EL), in particular a low-pressure discharge lamp, with a load circuit which has at least one current-limiting resonant inductor (L2) and at least one capacitor (C7, C8, C9), and also with a freewheeling invertor which is designed as a half- or full-bridge circuit with at least two switching elements (T1, T2), and with a drive circuit (AS) for driving the switching elements (T1, T2), characterized in that the drive circuit (AS) has an LC parallel tuned circuit (L3, C3; L4, C4), consisting of a capacitor (C3, C4) and an inductor (L3, L4) discharging this capacitor (C3, C4), parallel to a branch which forms the switching path between control electrodes and reference electrodes of a switching element (T1, T2), and in that the current-limiting resonant inductor (L2) of the load circuit carries an auxiliary winding (HW1, HW2) which is electrically connected to the LC parallel tuned circuit (L3, C3; L4, C4) through a resistor (R3, R4) (Figures 1, 3-13).

2. Circuit arrangement for operating a lamp (EL), in particular a low-pressure discharge lamp, with a load circuit which has at least one current-limiting resonant inductor (L2) and at least one capacitor (C7, C8, C9), and also with a freewheeling invertor which is designed as a half- or full-bridge circuit with at least two switching elements (T1, T2), and with a drive circuit (AS) for driving the switching elements (T1, T2), characterized in that the drive circuit (AS) has an LC parallel tuned circuit (L3, C3; L4, C4), consisting of a capacitor (C3, C4) and an inductor (L3, L4) discharging this capacitor (C3, C4), parallel to a branch which forms the switching path between control electrodes and reference electrodes of a switching element (T1, T2), and includes a resistor (R13, R14) parallel to the LC parallel tuned circuit (L3, C3; L4, C4), the inductor (L3, L4) of the LC parallel tuned circuit being magnetically coupled to one current-limiting resonant inductor (L2) of the load circuit (Figure 2).

3. Circuit arrangement according to one of Claims 1 or 2, characterized in that the inductor (L2) of the load circuit has a magnetic circuit with incorporated air gap, and the inductor (L3, L4) of the LC parallel tuned circuit is configured with an external air gap or as an air-core inductor.

4. Circuit arrangement according to one of the preceding claims, characterized in that the drive circuit (AS) consists of circuit parts (AS1, AS2) specific to the switching elements, and each circuit part (AS1, AS2) specific to the switching elements has an LC parallel tuned circuit (Figure 1).

5. Circuit arrangement according to Claim 4, characterized in that the natural resonant frequency of the LC parallel tuned circuits (L3, C3; L4, C4) of each circuit part (AS1, AS2) specific to the switching elements is the same.

6. Circuit arrangement according to one of Claims 4 or 5, characterized in that the LC parallel tuned circuits (L3, C3; L4, C4) of each circuit part (AS1, AS2) specific to the switching elements have identical inductors (L3, L4) and identical capacitors (C3, C4), respectively.

7. Circuit arrangement according to one of the preceding claims, characterized in that the inductors of the plurality of LC parallel tuned circuits are magnetically coupled.

8. Circuit arrangement according to Claim 1, characterized in that, in the case of a half-bridge circuit, the two switching elements (T1, T2) are formed from two mutually complementary transistors, and in that the drive circuit (AS) is configured in such a way that the LC parallel tuned circuit is connected, on the one hand, to the connection point of the two switching elements (T1, T2) and, -on the other hand, to the two control inputs of the switching elements (T1, T2) which are connected together (Figure 13).

9. Circuit arrangement according to one of Claims 1 to 3, characterized in that the drive circuit (AS) has, in addition to the parallel tuned circuit, a further circuit part (TR) which inverts a drive signal formed by the LC parallel tuned circuit, and in that the drive circuit is furthermore configured in such a way that the drive signal of the LC parallel tuned circuit is fed to one switching element (T1) and the inverted drive signal of the LC parallel tuned circuit is fed to the other switching element (T2), respectively (Figure 3).

10. Circuit arrangement according to one of Claims 1 to 3, characterized in that the drive circuit (AS) has, in addition to the parallel tuned circuit, a further circuit part (TR) which produces at a first output a drive signal formed by the LC parallel tuned circuit in inverted form, and at a second output the drive signal of the LC parallel tuned circuit in noninverted form, and in that the drive circuit (AS) is furthermore configured in such a way that the control input of one circuit part (T2) is connected to the first output of the circuit part (TR), and the control input of the other switching element (T1) is connected to the second output of the circuit part (TR) (Figure 4).

11. Circuit arrangement according to one of Claims 9 or 10, characterized in that the further circuit part (TR) is a transformer.

12. Circuit arrangement according to Claim 11, characterized in that the transformer has one or more secondary windings, and in that each secondary winding is assigned to at least one switching element (T1, T2) of the freewheeling half- or full-bridge circuit.

13. Circuit arrangement according to Claim 1 or 2, characterized in that the resistor (R3, R4; R13, R14) is linear, non-linear or temperature-dependent.

14. Circuit arrangement according to the preceding claims, characterized in that a series circuit consisting of a diode (D3, D4) and a resistor (R5, R6) is connected in parallel with the LC parallel tuned circuit in such a way that the half-cycle of the LC parallel tuned circuit during which the control voltage at the control input of a switching element (T1, T2) of the half- or full-bridge circuit is negative is more strongly damped so that a dead time ($t_T$) of the half-bridge (T1, T2 switched off) is extended (Figure 5).

**15.** Circuit arrangement according to one of Claims 1 to 9, characterized in that, between the LC parallel tuned circuit and the switching element (T1, T2), a further resistor (R7, R8) is arranged which, during the charge-transfer phase of a switching load-reduction capacitor (C6) by transfer of the charge of this capacitor (C6), produces a voltage drop which counteracts the drive voltage of the LC parallel tuned circuit so that switching-on of the switching element (T1, T2) during the transfer of the charge of the switching load-reduction capacitor (C6) is prevented (Figure 6).

**16.** Circuit arrangement according to Claim 15, characterized in that a diode (D7, D8) is connected in parallel with the further resistor (R7, R8) in such a way that its anode is connected to that terminal of the LC parallel tuned circuit which is not connected to the control input of the switching element (T1, T2) and that its cathode is connected to the reference potential of the switching element (T1, T2).

**17.** Circuit arrangement according to one of Claims 1 to 15, characterized in that, between the control input of a switching element and the corresponding LC parallel tuned circuit, a pulse-shaping and impedance-converting quadripole (VP) is looped in which accelerates the switching-off of the switching element (Figure 7 and 8).

**18.** Circuit arrangement according to one of Claims 1 to 15, characterized in that a voltage-dependent damping component (DG) is arranged in parallel with the LC parallel tuned circuit (Figure 9).

**19.** Circuit arrangement according to one of Claims 1 to 15, characterized in that a series circuit consisting of a Zener diode (ZD) and a resistor (RZ) which is connected to the anode of the Zener diode is connected in parallel with the LC parallel tuned circuit, and in that the control input of the switching element (T1, T2) is connected to the anode of the Zener diode and the reference potential of the switching element (T1, T2) is connected to the connection point between the resistor (RZ) and the LC parallel tuned circuit (Figure 10).

**20.** Circuit arrangement according to one of Claims 1 to 13, characterized in that, in series with the inductor (L3, L4) of the LC parallel tuned circuit, a parallel circuit consisting of a diode (D9, D10) and a resistor (R9, R10) is arranged in such a way that the cathode of the diode (D9, D10) and a terminal of the resistor (R9, R10) are connected to the reference potential of the control input of a switching element (T1, T2), and that the anode of the diode (D9, D10) and the other terminal of the resistor (R9, R10) are connected to the inductor (L3, L4) of the LC parallel tuned circuit, or the anode of the diode (D9, D10) and a terminal of the resistor (R9, R10) are connected to the control input of a switching element (T1, T2) and the cathode of the diode (D9, D10) and the other terminal of the resistor (R9, R10) are connected to the inductor (L3, L4) of the LC parallel tuned circuit, as a result of which a negative DC voltage offset, adjustable through the resistance of the resistor (R9, R10), is achieved in the drive voltage of the LC parallel tuned circuit relative to the control input of the switching element (T1, T2) (Fig. 11).

**21.** Circuit arrangement according to Claim 1 to 13, characterized in that a clamping resistor (RK1, RK2) is inserted between the control input of the switching element and the reference potential for this control input, and in that, in order to extend the dead time ($t_T$; T1, T2 switched off), a resistor divider (RS1, RS2, RS3, RS4) and a further switching element (T3, T4) are inserted between the control output of the LC parallel tuned circuit and the switching element (T1, T2), which switching element only applies the drive voltage of the LC parallel tuned circuit to the switching element (T1, T2) if the control voltage, formed by the resistor divider (RS1, RS2, RS3, RS4) from the drive voltage of the LC parallel tuned circuit, for this further switching element (T3, T4) exceeds the threshold voltage of the latter and switches it on (Fig. 12).

**22.** Circuit arrangement according to one of the preceding claims, characterized in that the threshold voltage of the switching elements (T1, T2) can be predetermined in such a way that a predeterminable on-time of the switching elements can be produced.

**Revendications**

**1.** Montage pour faire fonctionner une lampe (EL), notamment une lampe à décharge à basse pression, comprenant un circuit de charge, qui comporte au moins une inductance (L2) de résonance limitant le courant et au moins un condensateur (C7, C8, C9), ainsi qu'un inverseur libre constitué sous la forme d'un circuit en demi-pont ou en pont complet ayant au moins deux éléments (T1, T2) de circuit, et ayant un circuit (AS) de commande des éléments (T1, T2) de circuit, caractérisé en ce que le circuit (AS) de commande comporte un circuit oscillant parallèle (L3, C3 ; L4, C4) à LC, constitué d'un condensateur (C3, C4) et d'une inductance (L3, L4) déchargeant ce condensateur (C3, C4), en parallèle avec une branche qui forme la zone de commutation entre les électrodes de commande et de référence d'un élément (T1, T2) de circuit et en ce que l'inductance (L2) de résonance limitant le courant du circuit de charge porte un enroulement (HW1, HW2) auxiliaire qui est relié galvaniquement au circuit oscillant parallèle (L3, C3 ; L4, C4) à LC par une résistance (R3, R4) (figures 1, 3 à 13).

2. Montage pour faire fonctionner une lampe (EL), notamment une lampe à décharge à basse pression, comprenant un circuit de charge, qui comporte au moins une inductance (L2) de résonance limitant le courant et au moins un condensateur (C7, C8, C9) ainsi qu'un inverseur libre constitué sous la forme d'un circuit en demi-pont ou en pont complet ayant au moins deux éléments (T1, T2) de circuit, et ayant un circuit (AS) de commande des éléments (T1, T2) de circuit, caractérisé en ce que le circuit (AS) de commande comporte un circuit oscillant parallèle (L3, C3 ; L4, C4) à LC, constitué d'un condensateur (C3, C4) et d'une inductance (L3, L4) déchargeant ce condensateur, en parallèle avec une branche qui forme la zone de commutation entre des électrodes de commande et de référence d'un élément (T1, T2) de circuit et renferme une résistance (R13, R14) en parallèle au circuit oscillant parallèle (L3, C3 ; L4, C4) à LC, l'inductance (L3, L4) du circuit oscillant parallèle à LC étant couplée magnétiquement à l'inductance (L2) de résonance limitant le courant du circuit de charge (figure 2).

3. Montage suivant l'une des revendications 1 ou 2, caractérisé en ce que l'inductance (L2) du circuit de charge comporte un circuit magnétique à entrefer incorporé et l'inductance (L3, L4) du circuit oscillant parallèle à LC est constituée en ayant un entrefer extérieur ou en bobine à air.

4. Montage suivant l'une des revendications précédentes, caractérisé en ce que le circuit (AS) de commande est constitué de parties (AS1, AS2) de circuit propres à chaque élément de circuit et chaque partie (AS1, AS2) de circuit propre à un élément de circuit comporte un circuit oscillant parallèle à LC.

5. Montage suivant la revendication 4, caractérisé en ce que la fréquence propre de résonance du circuit oscillant parallèle (L3, C3 ; L4, C4) à LC de chaque partie (AS1, AS2) de circuit propre à chaque élément de circuit est la même.

6. Montage suivant l'une des revendications 4 ou 5, caractérisé en ce que les circuits oscillants parallèles (L3, C3 ; L4, C4) à LC de chaque partie (AS1, AS2) de circuit propre à chaque élément de circuit ont respectivement les mêmes inductances (L3, L4) et les mêmes capacités (C3, C4).

7. Montage suivant l'une des revendications précédentes, caractérisé en ce que les inductances de plusieurs circuits oscillants parallèles à LC sont couplées magnétiquement.

8. Montage suivant la revendication 1, caractérisé en ce que dans le cas d'un circuit à demi-pont, les deux éléments (T1, T2) de circuit sont constitués de deux transistors complémentaires l'un de l'autre et en ce que le circuit (AS) de commande est conformé de façon que le circuit oscillant parallèle à LC d'une part soit relié au point de liaison des deux éléments (T1, T2) de circuit et d'autre part aux deux entrées de commande qui sont reliées entre elles des éléments (T1, T2) de circuit (figure 13).

9. Montage suivant l'une des revendications 1 à 3, caractérisé en ce que le circuit (AS) de commande comporte, outre le circuit oscillant parallèle, une autre partie (TR) de circuit qui inverse un signal de commande formé par le circuit oscillant parallèle à LC et en ce que le circuit de commande est en outre conformé de façon à envoyer respectivement à un élément (T1) de circuit, le signal de commande du circuit oscillant parallèle à LC et à l'autre élément (T2) de circuit, le signal de commande inversé du circuit oscillant parallèle à LC (figure 3).

10. Montage suivant l'une des revendications 1 à 3, caractérisé en ce que le circuit (AS) de commande comporte, outre le circuit oscillant parallèle, une autre partie (TR) de circuit qui produit sur une première sortie un signal de commande formé par le circuit oscillant parallèle à LC sous forme inversée et sur une deuxième sortie, le signal de commande du circuit oscillant parallèle à LC sous forme non inversée et en ce que le circuit (AS) de commande est conformé en outre de façon à ce que l'entrée de commande de l'un des éléments (T2) de circuit soit reliée à la première sortie de la partie (TR) de circuit et l'entrée de commande de l'autre élément (T1) de circuit soit reliée à la deuxième sortie de la partie (TR) de circuit (figure 4).

11. Montage suivant l'une des revendications 9 ou 10, caractérisé en ce que l'autre partie (TR) de circuit est un transformateur.

12. Montage suivant la revendication 11, caractérisé en ce que le transformateur comporte un enroulement secondaire ou plusieurs enroulements secondaires et en ce que, respectivement, un enroulement secondaire est associé au moins à un élément (T1, T2) de circuit du circuit libre en demi-pont ou à pont complet.

13. Montage suivant l'une des revendications 1 ou 2, caractérisé en ce que la résistance (R3, R4 ; R13, R14) est linéaire, non linéaire ou variable en fonction de la température.

14. Montage suivant l'une des revendications précédentes, caractérisé en ce qu'il est monté en parallèle au circuit oscillant parallèle à LC un circuit série constitué d'une diode (D3, D4) et d'une résistance (R5, R6) de façon à amortir plus fortement la demi-oscillation du circuit oscillant parallèle à LC pour laquelle la tension de commande sur l'entrée de commande d'un élément (T1, T2) de circuit du circuit en demi-pont ou à pont complet est négative, de manière à prolonger un temps mort ($t_r$) du demi-pont (T1, T2 mis hors circuit) (figure 5).

15. Montage suivant l'une des revendications 1 à 9, caractérisé en ce qu'il est monté, entre le circuit oscillant parallèle à LC et l'élément (T1, T2) de circuit, une autre résistance (R7, R8) qui, pendant la phase de rechargement d'un condensateur (C6) de déchargement produit, par le rechargement de ce condensateur (C6), une chute de tension qui s'oppose à la tension de commande du circuit oscillant parallèle à LC de manière à empêcher le branchement de l'élément (T1, T2) de circuit pendant le déchargement du condensateur (C6) de déchargement (figure 6).

16. Montage suivant la revendication 15, caractérisé en ce qu'il est monté en parallèle à l'autre résistance (R7, R8) une diode (D7, D8), de manière son anode est reliée à la borne du circuit oscillant parallèle à LC qui n'est pas reliée à l'entrée de commande de l'élément (T1, T2) de circuit et en ce que sa cathode est reliée au potentiel de référence de l'élément (T1, T2) de circuit.

17. Montage suivant l'une des revendications 1 à 15, caractérisé en ce qu'il est inséré, entre l'entrée de commande d'un élément de circuit et le circuit oscillant parallèle à LC correspondant, un quadripôle (VP) de formation d'impulsions et d'adaptation d'impédance qui accélère la mise hors circuit de l'élément de circuit (figures 7 et 8).

18. Montage suivant l'une des revendications 1 à 15, caractérisé en ce qu'il est monté en parallèle au circuit oscillant parallèle à LC un organe d'amortissement (DG) en fonction de la tension (figure 9).

19. Montage suivant l'une des revendications 1 à 15, caractérisé en ce qu'il est monté en parallèle au circuit oscillant parallèle à LC un circuit série constitué d'une diode (ZD) Zener et d'une résistance (RZ) qui est reliée à l'anode de la diode Zener et en ce que l'entrée de commande de l'élément (T1, T2) de circuit est reliée à l'anode de la diode Zener et le potentiel de référence de l'élément (T1, T2) de circuit est relié au point de liaison entre la résistance (RZ) et le circuit oscillant parallèle à LC (figure 10).

20. Montage suivant l'une des revendications 1 à 13, caractérisé en ce qu'en série à l'inductance (L3, L4) du circuit oscillant parallèle à LC est monté un circuit parallèle constitué d'une diode (D9, D10) et d'une résistance (R9, R10) de façon que la cathode de la diode (D9, D10) et une borne de la résistance (R9, R10) soient reliées au potentiel de référence de l'entrée de commande d'un élément (T1, T2) de circuit et de façon que l'anode de la diode (D9, D10) et l'autre borne de la résistance (R9, R10) soient reliées à l'inductance (L3, L4) du circuit oscillant parallèle à LC ou que l'anode de la diode (D9, D10) et une borne de la résistance (R9, R10) soient reliées à l'entrée de commande d'un élément (T1, T2) de circuit et la cathode de la diode (D9, D10) et l'autre borne de la résistance (R9, R10) soient reliées à l'inductance (L3, L4) du circuit oscillant parallèle à LC de manière à obtenir un décalage négatif, réglable par la dimension de la résistance (R9, R10), de la tension . de commande du circuit oscillant parallèle à LC par rapport à l'entrée de commande de l'élément (T1, T2) de circuit (figure 11).

21. Montage suivant l'une des revendications 1 à 13, caractérisé en ce qu'il est inséré entre l'entrée de commande de l'élément de circuit et le potentiel de référence pour cette entrée de commande une résistance (RK1, RK2) de blocage et en ce que, pour prolonger le temps mort ($t_r$ ; T1, T2 étant mis hors circuit) entre la sortie de commande du circuit oscillant parallèle à LC et l'élément (T1, T2) de circuit, il est monté un diviseur (RS1, RS2, RS3, RS4) de résistance et un autre élément (T3, T4) de circuit, cet élément de circuit appliquant la tension de commande du circuit oscillant parallèle à LC à l'élément (T1, T2) de circuit seulement lorsque la tension de commande de cet autre élément (T3, T4) de circuit, tension formée par le diviseur (RS1, RS2, RS3, RS4) de résistance à partir de la tension de commande du circuit oscillant parallèle à LC, dépasse la tension de seuil de l'élément (T3, T4) de circuit et le met en circuit (figure 12).

22. Montage suivant l'une des revendications précédentes, caractérisé en ce que la tension de seuil des éléments (T1, T2) de circuit est prescrite de façon à pouvoir réaliser une durée de mise sous circuit pouvant être prescrite des éléments de circuit.

Figur 1

Figur 2

Figur 3

EP 0 781 077 B1

Figur 4

Figur 5

EP 0 781 077 B1

Figur 6

Figur 7

EP 0 781 077 B1

Figur 8

Figur 9

Figur 10

Figur 11

EP 0 781 077 B1

Figur 12

EP 0 781 077 B1

Figur 13

30

Figur 14

EP 0 781 077 B1

Figur 15

EP 0 781 077 B1

Figur 16

Figur 17